# EUROPÄISCHE PATENTSCHRIFT

(11) **EP 4 143 951 B1**
(45) Veröffentlichungstag und Bekanntmachung des Hinweises auf die Patenterteilung: **14.08.2024**
(21) Anmeldenummer: 21716126.4
(22) Anmeldetag: 26.03.2021
(51) Int. Cl.: H02K 3/12, H02K 3/28

(54) **STATOR FÜR EINE ELEKTRISCHE MASCHINE UND ELEKTRISCHE MASCHINE**
STATOR FOR AN ELECTRIC MACHINE, AND ELECTRIC MACHINE
STATOR POUR UNE MACHINE ÉLECTRIQUE, ET MACHINE ÉLECTRIQUE

(30) Priorität: 30.04.2020 DE 102020111826
(43) Veröffentlichungstag der Anmeldung: 08.03.2023
(73) Patentinhaber: Valeo eAutomotive Germany GmbH, 91056 Erlangen (DE)
(72) Erfinder: DOTZ, Boris, 97616 Bad Neustadt a.d.Saale (DE); FINGER-ALBERT, Christian, 97616 Bad Neustadt a.d.Saale (DE)
(74) Vertreter: Valeo Powertrain Systems
(86) Internationale Anmeldenummer: PCT/EP2021/057991
(87) Internationale Veröffentlichungsnummer: WO 2021/219306

(56) Entgegenhaltungen:
- EP-A2- 3 029 810
- WO-A1-2017/149934
- WO-A1-2019/130747
- DE-A1- 102019 122 550
- JP-A- 2009 131 092
- JP-A- 2013 081 356
- JP-B2- 4 265 973
- US-A1- 2019 027 977

## Beschreibung

Die vorliegende Erfindung betrifft einen Stator für eine elektrische Maschine. Daneben betrifft die Erfindung eine elektrische Maschine.

Das Dokument US 2015/0 244 227 A1 offenbart einen Stator, der einen Statorkern und eine Statorwicklung aufweist. Der Statorkern hat eine Vielzahl von in Umfangsrichtung angeordneten Nuten. Die Statorwicklung ist durch eine Vielzahl von Phasenwicklungen, die in die Nuten eingesetzt und im Statorkern gewickelt sind, ausgebildet. Der Statorkern hat n (n ist eine natürliche Zahl und größer gleich 2) In-Phase-Nuten, die in Umfangsrichtung aufeinanderfolgend vorgesehen sind, sodass sie magnetischen Polen eines Rotors entsprechen. In eine jeweilige der In-Phase-Nuten sind die Phasenwicklungen derselben Phase installiert. Eine jeweilige der Phasenwicklungen ist von einem Ende, das in einer Erstreckungsrichtung positioniert ist, zu einem anderen Ende in 2n Abschnitte aufgeteilt, sodass eine jeweilige der Phasenwicklungen durch eine erste Teilwicklung, eine zweite Teilwicklung bis zu einer 2n-ten Teilwicklung ausgebildet ist, die von einem Ende in der Erstreckungsrichtung in Reihe positioniert sind. Die erste Teilwicklung und die 2n-te Teilwicklung sind in verschiedenen In-Phase-Nuten des Statorkerns angeordnet.

Das Dokument JP 2013 081356 A offenbart ebenfalls einen Stator, der einen Statorkern und eine Stator wicklung aufweist.

Bei derartigen Statoren mit aus Formleitern gebildeten Statorwicklungen besteht, insbesondere im Hinblick auf automotive Anwendungen, die Herausforderung darin, die erforderliche Anzahl an Windungen Pfaden, die parallel oder in Reihe geschaltet werden können, zu realisieren und dabei Symmetrieanforderungen einzuhalten, einen möglichst geringen Wicklungsüberhang in Axialrichtung zu realisieren, einfache Anschlussmöglichkeiten der Phasen zu realisieren und eine Eignung für einen automatisierten Fertigungsprozess mit hoher Prozesszuverlässigkeit zu ermöglichen. Außerdem ist eine hohe Anzahl von Schichten, in denen die Formleiter radial geschichtet angeordnet sind, pro Nut gewünscht, um flache Formleiter zu verwenden, was geringe Verluste bei hohen Frequenzen ermöglicht.

Der Erfindung liegt die Aufgabe zugrunde, einen für automotive Anwendungen geeigneten Stator mit mehreren Pfaden und einer verhältnismäßig hohen Anzahl von Schichten je Nut anzugeben.

Diese Aufgabe wird erfindungsgemäß gelöst durch einen Stator für eine elektrische Maschine, wobei der Stator eine Anzahl N Phasen, eine Anzahl P Polpaare und eine Lochzahl q aufweist, wobei N ≥ 3 und P ≥ 2 und q ≥ 1, wobei der Stator einen Statorkern mit wenigstens 2·N·P·q Nuten und eine Anzahl 2·N·P·q·L Formleiter, die in einer Anzahl L Schichten radial geschichtet in den Nuten angeordnet sind, wobei L ≥ 4 und gerade ist, umfasst, wobei die Formleiter je Phase 2·q Pfade, die in Reihe oder parallel miteinander verschaltbar sind, ausbilden und in 2P Wicklungszonen, die sich jeweils radial über L Schichten und in Umfangsrichtung über wenigstens q unmittelbar benachbarte Nuten erstrecken, angeordnet sind, wobei die Formleiter jedes Pfads in einer Reihenschaltung verschaltet sind, die durch an beiden Stirnseiten der Statorkerns angeordnete Verbinder realisiert ist, wobei jeder Pfad L/2 Gruppen von aufeinanderfolgend in Reihe geschalteten Formleitern umfasst, wobei jede Gruppe durch wenigstens eine Anordnung von wenigstens vier Formleitern ausgebildet ist, die abwechselnd in zwei unmittelbar benachbarten Schichten angeordnet und durch erste Verbinder, die jeweils in Umfangsrichtung einen Versatz um q·N Nuten und in Radialrichtung einen Versatz um eine Schicht realisieren, in Reihe geschaltet sind, wobei Paare von bezüglich der Reihenschaltung benachbarten Gruppen jeweils durch einen zweiten Verbinder verbunden sind, der in Umfangsrichtung einen Versatz um mehrere Nuten und in Radialrichtung einen Versatz um zwei Schichten realisiert.

Der erfindungsgemäße Stator zeichnet sich dadurch aus, dass die Formleiter einer jeweiligen Gruppe abwechselnd in zwei unmittelbar benachbarten Schichten angeordnet und in Reihe geschaltet sind, sodass eine Wellenwicklung für jeden Pfad einer jeweiligen Phase realisiert wird. Besonders günstige Symmetrieeigenschaften ergeben sich daraus, dass die Paare von bezüglich der Reihenschaltung benachbarten Gruppen jeweils durch einen zweiten Verbinder verbunden sind, der in Umfangsrichtung ein Versatz um mehrere Nuten und in Radialrichtung ein Versatz um zwei Schichten realisiert. Dieser Versatz um zwei Schichten bewirkt, dass die Formleiter zweier bezüglich der Reihenschaltung benachbarter Gruppen sich gegensinnig in den Schichten abwechseln. Ist beispielsweise ein bezüglich der Reihenschaltung erster Formleiter einer bezüglich der Reihenschaltung ersten Gruppe radial weiter außen angeordnet als der nächste Formleiter dieser Gruppe, so ist der erste Formleiter der bezüglich der Reihenschaltung nächsten Gruppe radial weiter innen angeordnet als der nächste Formleiter dieser Gruppe, da der letzte Formleiter der ersten Gruppe und der ersten Formleiter der nächsten Gruppe durch einen zweiten Verbinder verbunden sind usw.

Es ergeben sich so eine besonders vorteilhafte symmetrische Anordnung der Gruppen. Eine automatisierte Fertigung wird insbesondere erleichtert, weil nur eine geringe Anzahl unterschiedlicher Typen von zweiten Verbindern erforderlich ist, um Wicklungsstruktur des erfindungsgemäßen Stators zu realisieren.

Bei den Formleitern handelt es sich typischerweise um stabförmige Leiter, insbesondere aus Kupfer. Die Formleiter sind typischerweise nicht biegeschlaff. Typischerweise nehmen L Formleiter in L Schichten wenigstens 60 %, bevorzugt wenigstens 80 %, der Querschnittsfläche einer Nut ein. In der Regel weisen die Formleiter einen, gegebenenfalls auch abgerundeten, rechteckigen Querschnitt auf. Typischerweise realisiert jede Wicklungszone einen Pol des Stators. Die Lochzahl q entspricht insbesondere der Anzahl an unmittelbar benachbarten Nuten, die in einer jeweiligen Schicht einer Phase des Stators zugeordnet sind.

Typischerweise gilt, dass N ≤ 12, bevorzugt N ≤ 9, besonders bevorzugt N ≤ 6. Es kann vorgesehen sein, dass P ≤ 20, bevorzugt P ≤ 16, besonders bevorzugt P ≤ 12. Typischerweise gilt, dass q ≤ 6, bevorzugt q ≤ 4, besonders bevorzugt q ≤ 3. Zweckmäßigerweise ist vorgesehen, dass L ≤ 16, bevorzugt L ≤ 12, besonders bevorzugt L ≤ 8. Die Anzahl der Nuten ist bevorzugt kleiner als 200, besonders bevorzugt kleiner als 120.

Grundsätzlich ist es zweckmäßig, wenn die Formleiter jeder Gruppe jede Wicklungszone einmal belegen, sodass eine Gruppe einen vollständigen Umlauf in Umfangsrichtung ausbildet. Vorzugsweise sind bezüglich der Reihenschaltung erste Formleiter einer jeweiligen Gruppe in denselben Wicklungszonen angeordnet und letzte Formleiter in denselben Wicklungszonen angeordnet.

Obwohl der erfindungsgemäße Stator durchaus eine Lochzahl q = 1 aufweisen kann, wird es bevorzugt, wenn q ≥ 2, insbesondere q = 2. Dabei weist jede Wicklungszone typischerweise eine erste bis q-te Teilwicklungszone auf, wobei sich jede Teilwicklungszone über die L Schichten erstreckt. Die Teilwicklungszonen einer jeweiligen Wicklungszone sind typischerweise in Umfangsrichtung unmittelbar benachbart.

Gemäß einer ersten bevorzugten Ausgestaltungsvariante erstreckt sich jede Teilwicklungszone über genau eine Nut. Dadurch kann ein gerader bzw. ungesehnter Stator realisiert werden.

Mit Vorteil kann vorgesehen sein, dass die zweiten Verbinder, die Gruppen eines jeweiligen Pfades verbinden, denselben Versatz um mehrere Nuten realisieren. Dadurch könne die Symmetrieeigenschaften hinsichtlich eines jeweiligen Pfades verbessert werden.

In bevorzugter Ausgestaltung kann vorgesehen sein, dass zweite Verbinder wenigstens eines der Pfade, insbesondere zweite Verbinder von q Pfaden, einen Versatz um N·q-1 Nuten realisieren. Alternativ oder zusätzlich realisieren zweite Verbinder wenigstens eines der Pfade, insbesondere zweite Verbinder von q Pfaden, einen Versatz um N·q+1 Nuten. Dadurch wird ein Wechsel der Teilwicklungszonen durch einen jeweiligen zweiten Verbinder realisiert, um die Symmetrieeigenschaften zu verbessern.

Gemäß einer alternativen Ausgestaltung, mit welcher vorteilhafterweise ein Stator mit einer gesehnten Wicklung realisiert werden kann, ist vorgesehen, dass sich jede Teilwicklungszone über wenigstens zwei unmittelbar benachbarte Nuten erstreckt und in Radialrichtung eine Anzahl V von Versprüngen um jeweils eine Nut aufweist, wobei V ≥ 1. Typischerweise gilt, dass V ≤ 6, bevorzugt V ≤ 3, besonders bevorzugt V ≤ 2. Es wird dabei bevorzugt, wenn die Versprünge dieselbe Orientierung in Umfangsrichtung aufweisen und/oder nach jeweils L/[V+1] Schichten erfolgen.

Um einen Wechsel der Teilwicklungszonen durch die zweiten Verbinder bei einem Stator mit einer gesehnten Wicklung zu realisieren, was die Symmetrieeigenschaften verbessert, kann vorgesehen sein, dass zweite Verbinder wenigstens eines der Pfade einen Versatz um N·q-1 Nuten und/oder N·q-1 Nuten realisieren, wenn sie keinen Versprung in Radialrichtung überstreichen. Um den Wechsel bei einem links-gesehnten Stator zu realisieren, wird es bevorzugt, wenn zweite Verbinder wenigstens eines der Pfade einen Versatz um N·q-2 Nuten und/oder N·q Nuten realisieren, wenn sie einen Versprung in Radialrichtung überstreichen. Um den Wechsel bei einem rechts-gesehnten Stator zu realisieren, wird es bevorzugt, wenn zweite Verbinder wenigstens eines der Pfade einen Versatz um N·q+2 Nuten und/oder N·q Nuten realisieren, wenn sie einen Versprung in Radialrichtung überstreichen.

Mit besonderem Vorteil kann bei dem eine Lochzahl q ≥ 2 aufweisenden Stator vorgesehen sein, dass jede Gruppe q Anordnung umfasst, die jeweils in einer anderen der Teilwicklungszonen angeordnet sind. Dabei wird es besonders bevorzugt, wenn bezüglich der Reihenschaltung unmittelbar benachbarte Anordnungen einer jeweiligen Gruppe durch einen dritten Verbinder, der in Umfangsrichtung einen Versatz um eine Anzahl ungleich N·q Nuten und in Radialrichtung einen Versatz um eine Schicht realisiert, verbunden sind. Dadurch wird bei gleichzeitiger Fortsetzung der Wellenwicklung ein Wechsel der Teilanordnungszone bei benachbarten Anordnungen realisiert.

Aus Symmetriegründen wird es dabei bevorzugt, wenn die dritten Verbinder eines jeweiligen Pfades denselben Versatz in Umfangsrichtung realisieren.

Außerdem kann vorgesehen sein, dass dritte Verbinder wenigstens eines der Pfade einen Versatz um N·q+1 Nuten realisieren und/oder dritte Verbinder wenigstens eines der Pfade einen Versatz um N·q-1 Nuten realisieren.

Ein besonders geringer Wicklungsüberhang lässt sich erreichen, wenn dritte Verbinder unterschiedlicher Pfade, welche dritten Verbinder zwischen denselben Wicklungszonen Formleiter in denselben Schichten verbinden, derart angeordnet sind, dass ein dritter Verbinder, welche einen geringen Versatz um die mehreren Nuten realisiert als ein anderen dritter Verbinder, axial weiter innen als der andere dritte Verbinder angeordnet ist.

Bei dem erfindungsgemäßen Stator lässt sich vorzugsweise ein besonders geringer Wicklungsüberhang erreichen, wenn zweite Verbinder unterschiedlicher Pfade, welche zweiten Verbinder zwischen denselben Wicklungszonen Formleiter in denselben Schichten verbinden, derart angeordnet sind, dass ein zweiter Verbinder, welcher einen geringen Versatz um die mehreren Nuten realisiert als ein anderer zweiter Verbinder, axial weiter innen als der andere zweite Verbinder angeordnet ist.

Mit anderen Worten sind die beiden zweiten bzw. dritten Verbinder ineinander angeordnet, sodass der axial zur Verfügung stehende Bauraum effizient ausgenutzt wird. Dabei können die zweiten bzw. dritten Verbinder parallel und/oder bezogen auf ihre Positionen in Radialrichtung und/oder Umfangsrichtung äquidistant verlaufen.

Der Verringerung des Wicklungsüberhang ist es auch zuträglich, wenn q gleichgroße Mengen von Pfaden bezüglich der Reihenschaltung dieselbe Folge von Verbindern aufweisen, die jeweils um N·q Nuten gegeneinander versetzt ist. Dadurch kann erzielt werden, dass zweite bzw. dritte Verbinder einer Menge der Pfade nicht an den gleichen Positionen in Umfangsrichtung angeordnet sind wie zweite bzw. dritte Verbinder anderer Mengen der Pfade.

Mit Vorteil kann bei dem erfindungsgemäßen Stator ferner vorgesehen sein, dass die an einer der Stirnseiten des Statorkerns angeordneten Verbinder jeweils einstückig mit den durch sie verbundenen Formleitern ausgebildet sind und die an der anderen Stirnseite des Statorkerns angeordneten Verbinder durch das, vorzugsweise stoffschlüssige, Verfügen von freien Enden von Verbindungselementen, die einstückig mit dem Formleiter ausgebildet sind und sich an diesen Formleiter anschließen, ausgebildet sind. Dadurch kann eine fertigungstechnisch besonders vorzugswürdig Haarnadelwicklung realisiert werden. Entsprechende Anordnungen aus einem Verbinder, zwei Formleitern sowie Verbindungselementen werden auch als "U-Pins" bezeichnet. Es alternativ auch denkbar, dass die Verbinder und/oder die Verbindungselemente nicht einstückig mit den Formleitern ausgebildet sind und beispielsweise durch ein Befestigungsmittel, wie Schrauben oder Nieten, an den Formleitern befestigt sind.

Bevorzugt sind die ersten Verbinder einer jeweiligen Anordnung jeweils abwechselnd einerseits einstückig mit den durch sie verbunden Formleitern ausgebildet und andererseits durch das Verfügen der Verbindungselemente ausgebildet. Bevorzugt sind alle zweiten und/oder alle dritten Verbinder einstückig mit den durch sie verbundenen Formleitern ausgebildet.

Dabei weist jeder an der ersten Stirnseite angeordnete Verbinder vorzugsweise zwei sich in Axialrichtung und Umfangsrichtung erstreckende, insbesondere stumpfwinklig, abstehende Abschnitte auf. Vorzugsweise erstreckt sich jeder abstehende Abschnitt entlang einer vorgegebenen Radialposition. Die abstehenden Abschnitte können durch einen Übergangsabschnitt, welcher den Versatz in Radialrichtung ausbildet, verbunden sein.

Die Verbindungselemente umfassen bevorzugt jeweils einen sich in Axialrichtung und Umfangsrichtung erstreckenden abstehenden Abschnitt. An den abstehenden Abschnitt kann sich ein Fügeabschnitt, der sich in Axialrichtung erstreckt, anschlie-ßen, an dem das Verbindungselement mit dem anderen Verbindungselement, das den ersten Verbinder an der anderen Stirnseite ausbildet, verfügt ist.

In vorteilhafter Ausgestaltung des erfindungsgemäßen Stators kann ferner vorgesehen sein, dass ein jeweiliger bezüglich der Reihenschaltung äußerer Formleiter eines jeweiligen Pfades ein an einer der Stirnseiten des Statorkerns hervorstehendes freies Ende aufweist und sich an der anderen Stirnseite ein Verbindungselement an den Formleiter anschließt, dessen freies Ende mit dem oder einem Verbindungselement, das an den zweitäußeren Formleiter des Pfades anschließt, verfügt ist. Die Verbindungselemente lassen sich dann besonders günstig zum Anschließen der Pfade verwenden.

Gemäß einer bevorzugten Ausgestaltung des erfindungsgemäßen Stators sind die Pfade einer jeweiligen Phase zu einem Sternpunkt der Phasen verschaltet. Alternativ können die Pfade einer jeweiligen Phase zu mehreren, insbesondere zwei, Sternpunkten der Phasen verschaltet sein.

Zweckmäßigerweise umfasst der Stator ferner eine Anschlusseinrichtung, die mit den bezüglich der Reihenschaltung äußeren Formleitern verbunden ist und die Phasenanschlüsse und/oder einen oder mehrere Sternpunktverbinder ausbildet.

Gemäß einer bevorzugten Ausgestaltung gilt: N = 3 und P = 4 und q = 2 und L = 8. Dabei ist vorzugsweise V = 1. Typischerweise beträgt die Anzahl der Nuten dann 48.

Die der Erfindung zugrunde liegende Aufgabe wird ferner erfindungsgemäß durch eine elektrische Maschine gelöst, umfassend einen erfindungsgemäßen Stator und ein innerhalb des Stators drehbar angeordneten Rotor. Die elektrische Maschine ist bevorzugt ein Elektromotor. Die elektrische Maschine ist vorzugsweise eine rotierende elektrische Maschine. Die elektrische Maschine ist typischerweise als Drehfeldmaschine ausgebildet. In vorteilhafter Ausgestaltung ist die elektrische Maschine eine, insbesondere permanenterregte, Synchronmaschine oder eine Asynchronmaschine.

Die der Erfindung zugrunde liegende Aufgabe kann ferner durch ein Fahrzeug gelöst werden, umfassend eine erfindungsgemäße elektrische Maschine, welche zum Antreiben des Fahrzeugs eingerichtet ist. Das Fahrzeug ist bevorzugt ein teilweise oder vollständig elektrisch angetriebenes Fahrzeug, beispielsweise ein Hybridfahrzeug oder ein batterieelektrisches Fahrzeug (BEV).

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine perspektivische Ansicht eines ersten Ausführungsbeispiels des erfindungsgemäßen Stators;
- Fig. 2: eine Detailansicht des in Fig. 1 gezeigten Stators im Bereich einer ersten Stirnseite des Stators;
- Fig. 3a und 3b: ein Wicklungsschema einer Phase des in Fig. 1 gezeigten Stators;
- Fig. 4 bis 7: jeweils zwei durch einen ersten Verbinder verbundene Formleiter des in Fig. 1 gezeigten Stators;
- Fig. 8 bis 13: jeweils zwei durch einen zweiten Verbinder verbundene Formleiter des in Fig. 1 gezeigten Stators;
- Fig. 14: mehrere durch erste und dritte Verbinder verbundene Formleiter des in Fig. 1 gezeigten Stators;
- Fig. 15 bis 22: jeweils zwei durch einen dritten Verbinder verbundene Formleiter des in Fig. 1 gezeigten Stators;
- Fig. 23: eine Frontalansicht der ersten Stirnseite des ersten Ausführungsbeispiels;
- Fig. 24a und 24b: ein Wicklungsschema eines zweiten Ausführungsbeispiels des erfindungsgemäßen Stators;
- Fig. 25: eine Frontalansicht der ersten Stirnseite des zweiten Ausführungsbeispiels;
- Fig. 26a und 26b: ein Wicklungsschema eines dritten Ausführungsbeispiels des erfindungsgemäßen Stators;
- Fig. 27: eine Frontalansicht der ersten Stirnseite des dritten Ausführungsbeispiels;
- Fig. 28 u. 29: jeweils ein Schaltbild der Pfade eines Stators gemäßen dem ersten bis dritten Ausführungsbeispiels; und
- Fig. 30: eine Prinzipskizze eines Ausführungsbeispiels der erfindungsgemäßen elektrischen Maschine für den Antrieb eines Fahrzeugs.

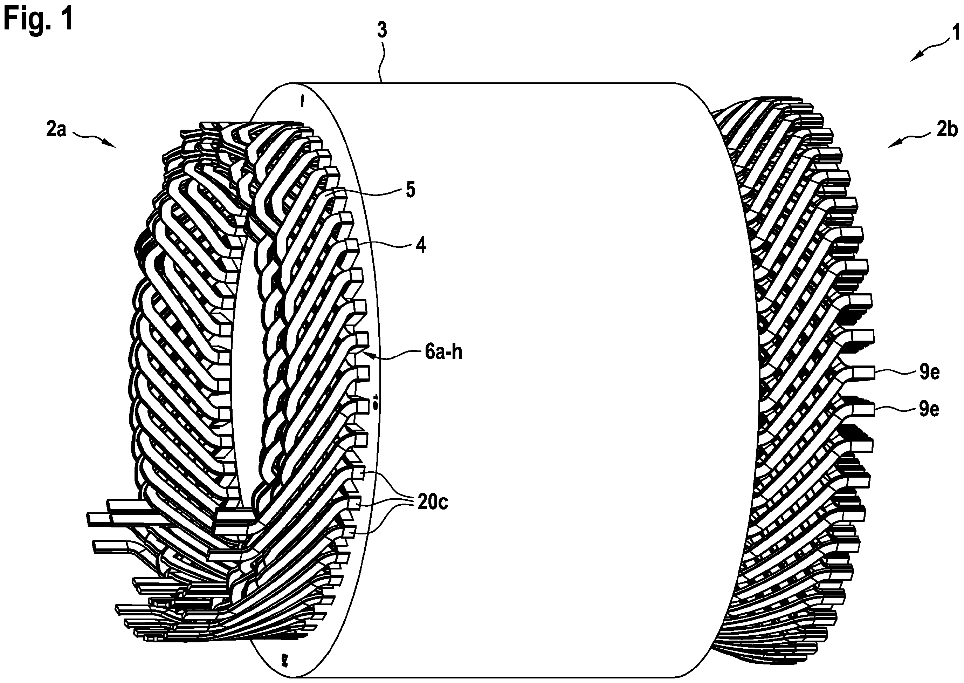

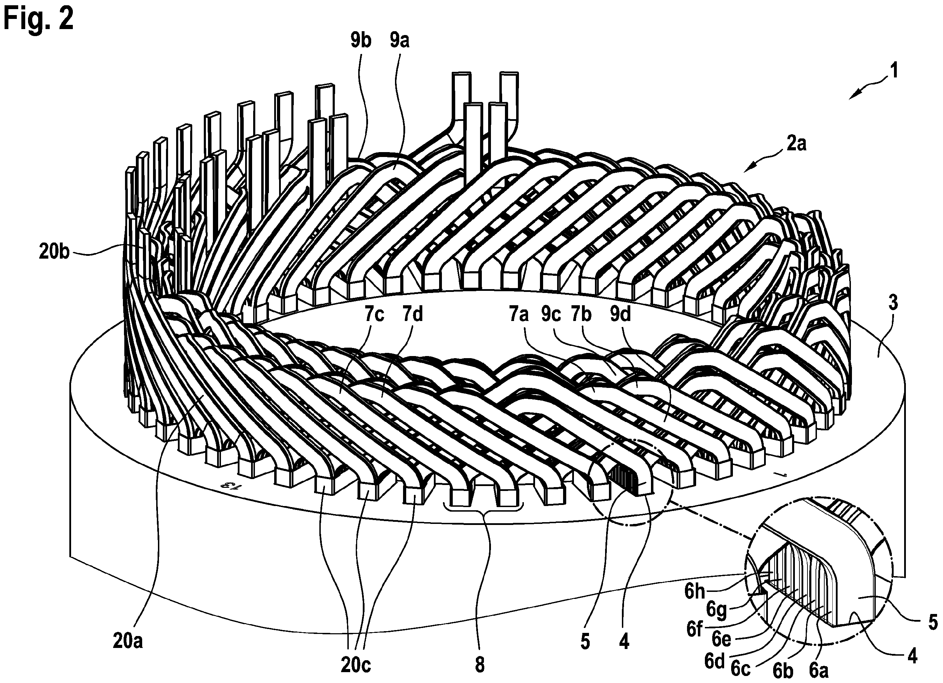

Fig. 1 und Fig. 2 zeigen jeweils ein erstes Ausführungsbeispiel eines Stators 1, wobei Fig. 1 eine perspektivische Teilansicht und Fig. 2 eine zugehörige Detailansicht im Bereich eine ersten Stirnseite 2a des Stators 1 ist.

Der Stator 1 weist drei Phasen U, V, W (N = 3), vier Polpaare (P = 4) und eine Lochzahl zwei (q = 2) auf. Der Stator umfasst einen Statorkern 3 mit 48 Nuten 4 und 384 Formleitern 5, die in acht Schichten 6a bis 6h (L = 8) radial geschichtet in den Nuten 4 angeordnet sind. Dabei ist die erste Schicht 6a die radial äußerste Schicht und die achte Schicht 6h die radial innerste Schicht, wobei die zweite bis siebte Schicht 6b bis 6g in der Reihenfolge ihrer Indizierung von außen nach innen bezeichnet sind.

Die Formleiter 5 bilden je Phase U, V, W vier Pfade 7a bis 7d aus, die in Reihe oder parallel miteinander verschaltbar sind, aus. Die Formleiter 5 sind ferner in 16 Wicklungszonen 8, die sich jeweils radial über die Schichten 6a bis 6h und in Umfangsrichtung über zwei unmittelbar benachbarten Nuten 4 erstrecken, angeordnet. Dabei entspricht die Anzahl der Wicklungszonen dem Doppelten der Anzahl der Polpaare, also der Anzahl der Pole, und die Anzahl der unmittelbar benachbarten Nuten 4, über die sich eine Wicklungszone 8 erstreckt, der Lochzahl q. Jede Wicklungszone 8 ist wiederum in eine der Lochzahl q entsprechende Anzahl von Teilwicklungszonen 8a, 8b untergliedert, die sich über alle Schichten 6a bis 6h erstrecken und in Umfangsrichtung unmittelbar benachbart sind. Im vorliegenden Ausführungsbeispiel ist der Stator 1 als nicht-gesehnter Stator ausgebildet, sodass jede Teilwicklungszone 8a, 8b genau eine Nut 4 umfasst.

Die Formleiter 5 jedes Pfads 7a bis 7d sind in einer Reihenschaltung verschaltet, die durch an beiden Stirnseiten 2a, 2b der Statorkerns 3 angeordnete Verbinder realisiert ist. Dabei sind erste Verbinder 9a bis 9e, zweite Verbinder 10a bis 10f und dritte Verbinder 11a bis 11h vorgesehen.

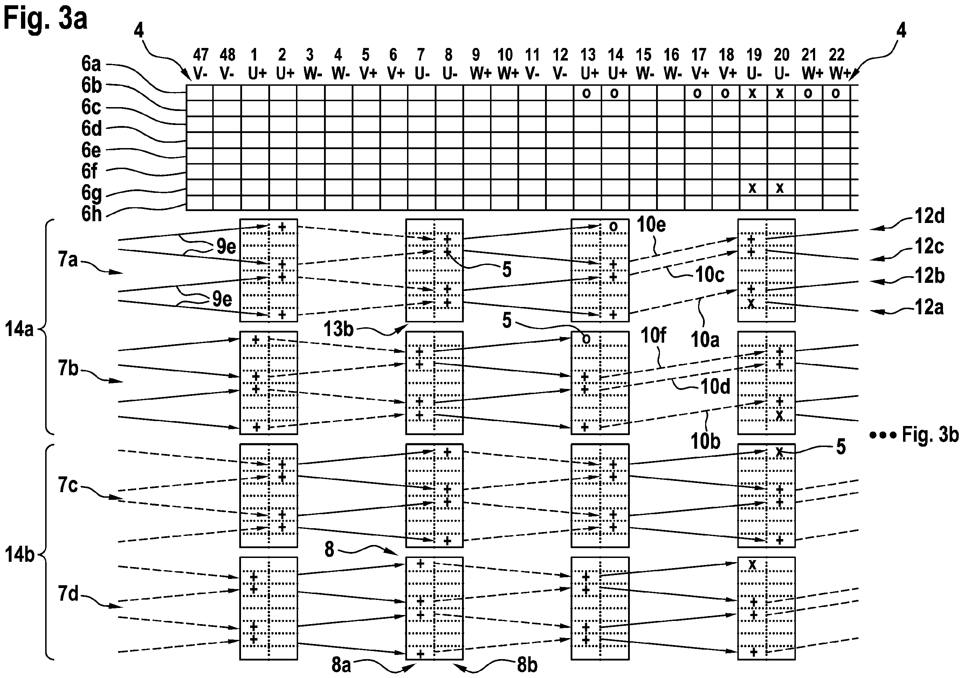

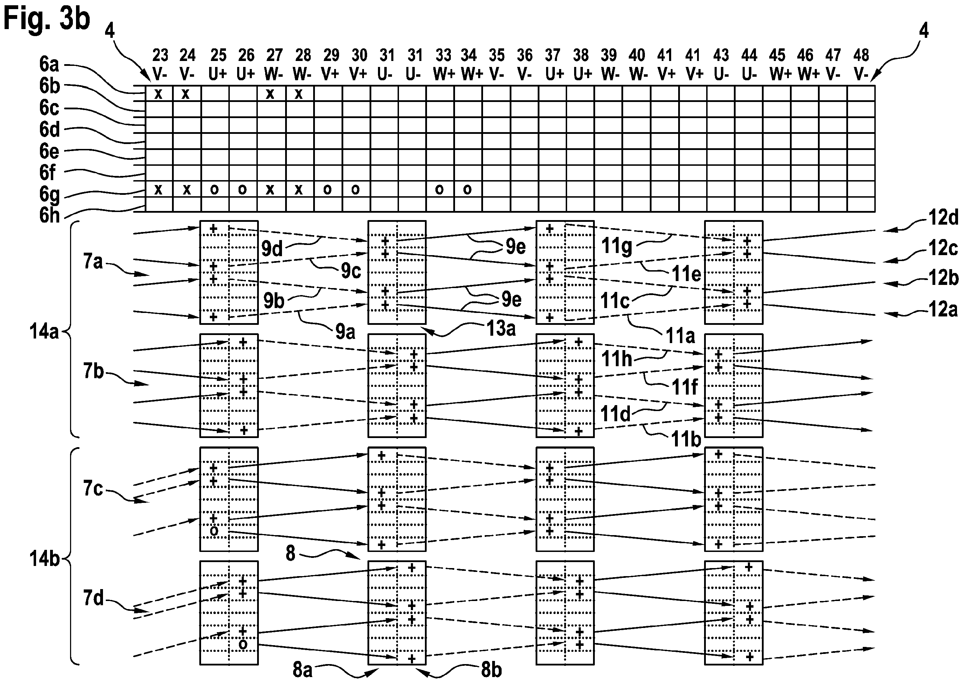

Fig. 3a und Fig. 3b zeigen ein Wicklungsschema des Stators 1 gemäß dem ersten Ausführungsbeispiel.

In der obersten Zeile von Fig. 3a und Fig. 3b sind Nummern "1" bis "48" der Nuten 4 im Uhrzeigersinn bezogen auf die Stirnseite 2a angegeben, wobei Fig. 3a und Fig. 3b zwischen Nut 4 Nummer "22" und "23" aufgeteilt sind. Die obere Tabelle zeigt bezogen auf die Nuten 4 und die Schichten 6a bis 6h die Position eines Anfangs und eines Endes eines jeweils Pfads 7a bis 7d für die Phasen U, V, W, wobei mit U+, V+, W+ Wicklungszonen 8 gekennzeichnet sind, in denen die Formleiter 5 in einer ersten Stromrichtung durchflossen werden, und mit U-, V-, W- Wicklungszonen 8 gekennzeichnet sind, in denen die Formleiter 5 in einer zur ersten Stromrichtung entgegengesetzten zweiten Stromrichtung durchflossen werden. Unter der Tabelle ist für einen jeweiligen Pfad 7a bis 7d der Phase U jeweils die Position eines Formleiters 5 in den Wicklungszonen 8 dargestellt. Dabei sind die ersten Verbinder 9a bis 9d, die zweiten Verbinder 10a bis 10f und die dritten Verbinder 11a bis 11h an der ersten Stirnseite 2a durch gestrichelte Pfeile dargestellt und die ersten Verbinder 9e an der zweiten Stirnseite 2b durch durchgezogene Pfeile dargestellt. Wie aus Fig. 3a und Fig. 3b ersichtlich umfasst jeder Pfad 7a bis 7d eine der Hälfte der Anzahl der Schichten 6a bis 6g entsprechende Anzahl von Gruppen 12a bis 12d von aufeinanderfolgend in Reihe geschalteten Formleitern 5. Dabei sind mit einem Symbol "x" Enden, also bezüglich der Reihenschaltung äu-ßere Formleiter 5, eines jeweiligen Pfads 7a bis 7d gekennzeichnet, die mit einem Phasenanschluss verbunden werden können. Mit einem Symbol "o" sind entsprechende Enden eines jeweiligen Pfads 7a bis 7d gekennzeichnet, die zu einem Sternpunkt verschaltet werden. Übrige Formleiter 5 sind mit dem Symbol "+" gekennzeichnet.

Paare von bezüglich der Reihenschaltung benachbarten Gruppen 12a bis 12d sind jeweils durch einen der zweiten Verbinder 10a bis 10f verbunden. Die zweiten Verbinder 10a bis 10f realisieren jeweils in Radialrichtung einen Versatz um zwei Schichten 6a bis 6h. Die zweiten Verbinder 10a, 10c und 10e der Pfade 7a und 7c realisieren in Umfangsrichtung einen Versatz um fünf (N·q-1) Nuten 4, wohingegen die zweiten Verbinder 10b, 10d, 10f der Pfade 7b und 7d in Umfangsrichtung einen Versatz um sieben (N·q+1) Nuten 4 realisieren. Mithin befinden bei einem jeweiligen Pfad 7a bis 7d die erste Gruppe 12a in der achten Schicht 6h und in der siebten Schicht 6g, die zweite Gruppe 12b in der sechsten Schicht 6f und in der fünften Schicht 6e, die dritte Gruppe 12c in der vierten Schicht 6d und in der dritten Schicht 6c sowie die vierte Gruppe 12d in der zweiten Schicht 6b und in der ersten Schicht 6a. Mithin befindet sich in jeder Wicklungszone 8 einer Phase U, V, W genau ein Formleiter 5 einer jeweiligen Gruppe 12a bis 12d. Anders gesprochen vollziehen die Formleiter 5 einer jeweiligen Gruppe 12a bis 12d einen Umlauf in Umfangsrichtung.

Jede Gruppe 12a bis 12d ist durch zwei Anordnungen 13a, 13b von vier Formleitern 5 ausgebildet, die abwechselnd in den zwei unmittelbar benachbarten Schichten 6a bis 6h angeordnet und durch die ersten Verbinder 9a bis 9e in Reihe geschaltet sind. Exemplarisch umfasst die erste Anordnung 13a des ersten Pfads 7a mithin die in der achten Schicht 6h und in der siebten Schicht 6g und in den Nuten mit den Nummern "19", "25", "31" und "47" angeordneten Formleiter 5. Die zweite Anordnung 13b des ersten Pfads 7a umfasst dementsprechend die in der achten Schicht 6h und in der siebten Schicht 6g und in den Nuten mit den Nummern "44", "2", "8" und "14" angeordneten Formleiter 5. Jeder erste Verbinder 9a bis 9e zwischen zwei bezüglich der Reihenschaltung unmittelbar benachbarten Formleitern 5 einer jeweiligen Anordnung 13a, 13b realisiert dabei in Umfangsrichtung einen Versatz um sechs Nuten 4 und einen Versatz um eine Schicht 6a bis 6h in Radialrichtung.

Die Anordnungen 13a, 13b sind jeweils in einer anderen der beiden Teilwicklungszonen 8a, 8b einer jeweiligen Wicklungszone 8 angeordnet. Hier befinden sich die ersten Anordnungen 13a des ersten Pfads 7a und des vierten Pfads 7d in der ersten Teilwicklungszone 8a einer jeweiligen Wicklungszone 8 und die ersten Anordnungen 13b des zweiten Pfads 7b und des dritten Pfads 7c in der zweiten Teilwicklungszone 8b einer jeweiligen Wicklungszone 8. Entsprechend befinden sich die zweiten Anordnungen 13b des ersten Pfads 7a und des vierten Pfads 7d in der zweiten Teilwicklungszone 8b einer jeweiligen Wicklungszone 8 und die zweiten Anordnungen 13b des zweiten Pfads 7b und des dritten Pfads 7c in der ersten Teilwicklungszone 8b einer jeweiligen Wicklungszone 8.

Die Anordnungen 13a, 13b einer jeweiligen Gruppe 12a bis 12d sind durch einen der dritten Verbinder 11a bis 11g verbunden. Die dritten Verbinder 11a, 11c, 11e, 11g realisieren dabei einen Versatz um sieben (N·q+1) Nuten 4, wohingegen die dritten Verbinder 11b, 11d, 11f, 11h einen Versatz um fünf (N-q-1) Nuten 4realisiert. Die dritten Verbinder 11a, 11c, 11e, 11g sind folglich dazu vorgesehen, in der ersten Teilwicklungszone 8a anordnete Anordnungen 13a, 13b mit in der zweiten Teilwicklungszone 8b angeordneten Anordnungen 13a, 13b zu verbinden, wohingegen die dritten Verbinder 11b, 11d, 11f, 11h dazu vorgesehen sind, in der zweiten Teilwicklungszone 8b angeordnete Anordnungen 13a, 13b mit in der ersten Teilwicklungszone 8a anordneten Anordnungen 13a, 13b zu verbinden. Um den kontinuierlichen Wechsel zwischen den unmittelbar benachbarten Schichten 6a bis 6h zu gewährleisten, sind im ersten Pfad 7a und im dritten Pfad 3c nur die einen Versatz um sieben Nuten 4 realisierenden dritten Verbinder 11a, 11c, 11e, 11g und im zweiten Pfad 7b und vierten Pfad 7d nur die einen Versatz um fünf Nuten 4 realisierenden dritten Verbinder 11b, 11d, 11f, 11h vorgesehen.

Wie Fig. 3a und Fig. 3b ferner zu entnehmen ist, sind die Pfade 7a bis 7d in eine der Lochzahl q entsprechenden Anzahl von Mengen 14a, 14b, also vorliegend zwei Mengen 14a, 14b, untergliedert, wobei die erste Menge 14a den ersten Pfad 7a und den zweiten Pfad 7b umfasst und die zweite Menge 14b den dritten Pfad 7c und den vierten Pfad 7d umfasst. Beide Mengen 14a, 14b weisen dieselbe Folge von Verbindern 9a bis 9e, 10a bis 10f, 11a bis 11g auf, sind aber um eine Wicklungszone 8 bzw. um sechs (N·q) Nuten 4 in Umfangsrichtung gegeneinander versetzt.

Aus der Gesamtsicht der Pfade 7a bis 7c ergibt sich mithin, dass die Wicklungszonen 8 für die Phase U vollständig mit Formleitern 5 besetzt sind. Das heißt, dass in jeder Teilwicklungszone 8a, 8b einer jeweiligen Wicklungszone alle Schichten 6a bis 6h mit jeweils einem Formleiter 5 besetzt sind. Wicklungszonen 8 der anderen Phasen V, W sind analog zur Phase U mit durch entsprechende Verbinder 9a bis 9e, 10a bis 10f, 11a bis 11g verbundenen Formleitern 5 belegt.

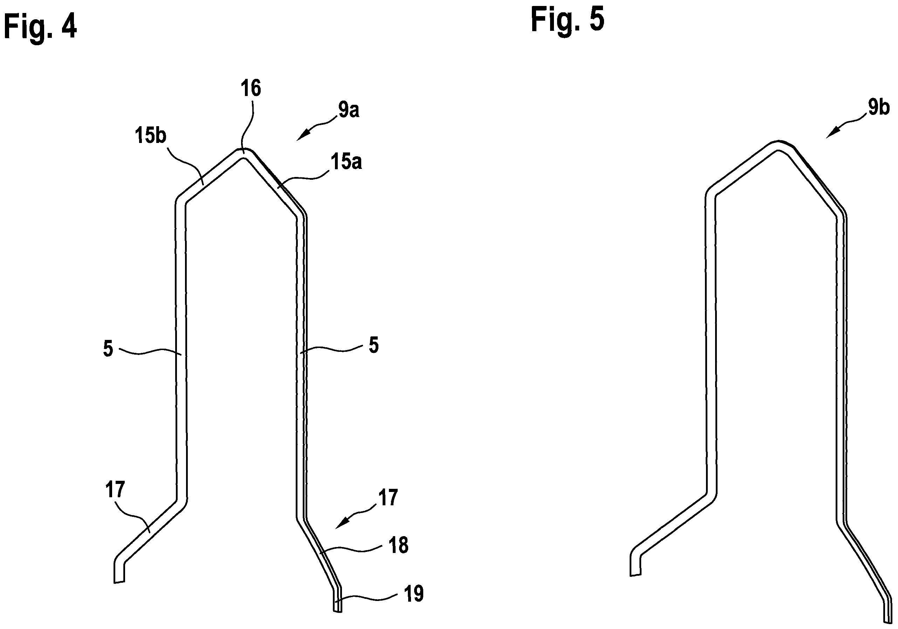

Fig. 4 bis 13 und Fig. 15 bis 22 zeigen jeweils zwei durch einen Verbinder 9a bis 9d, 10a bis 10f, 11a bis 11g verbundene Formleiter 5.

Fig. 4 zeigt zwei parallel zueinander angeordneten Formleiter 5, die einstückig mit dem ersten Verbinder 9a ausgebildet sind. Der erste Verbinder 9a umfasst zwei abstehende Abschnitte 15a, 15b, die stumpfwinklig vom jeweiligen Formleiter 5 abstehen. Die abstehenden Abschnitte 15a, 15b erstrecken sich an der Radialposition, an der sich der Formleiter 5, von dem sie abstehen, befindet, in Umfangsrichtung und Axialrichtung. Wie auch Fig. 2 zu entnehmen ist, weisen die abstehenden Abschnitte 15a, 15b mithin eine Bogenform auf.

Die abstehenden Abschnitte 15a, 15b sind an ihren dem Formleiter 5 abgewandten Enden durch einen Übergangsabschnitt 16 miteinander verbunden. Der Übergangsabschnitt 16 realisiert dabei den Versatz in Radialrichtung. Der Übergangsabschnitt 16 erstreckt sich folglich im Wesentlichen in Umfangsrichtung und in Radialrichtung.

An einen jeweiligen Formleiter 5 schließt sich an dessen dem ersten Verbinder 9a gegenüberliegenden Ende ein Verbindungselement 17 an, das einstückig mit dem Formleiter 5 ausgebildet ist. Das Verbindungselement 17 umfasst einen abstehenden Abschnitt 18, der stumpfwinklig vom Formleiter 5 absteht. Der abstehende Abschnitte 18 erstreckt sich von der Radialposition des Formleiters 5, von dem er absteht, radial nach außen gebogen in Umfangsrichtung und Axialrichtung. Wie auch Fig. 1 zu entnehmen ist, weist der abstehende Abschnitt 18 mithin eine Bogenform auf. An den abstehenden Abschnitt 18 schließt sich ein Fügeabschnitt 19 an, der sich im Wesentlichen nur in Axialrichtung erstreckt.

Die an der zweiten Stirnseite 2b vorgesehenen ersten Verbinder 9e sind durch das stoffschlüssige Verfügen, beispielsweise durch Verschweißen, der Fügeabschnitte 19 von Verbindungselementen 17, die sich an zwei bezüglich der Reihenschaltung aufeinanderfolgende Formleiter 5 anschließen, ausgebildet. Dabei sind die Fügeabschnitte 19 mit ihren Flachseiten parallel zueinander angeordnet. Dadurch, dass die abstehenden Abschnitte 18 der Verbindungselemente 17 nach außen gebogen sind, wird ein ausreichender Isolierabstand zwischen zwei radial benachbarten ersten Verbindern 9e gewährleistet.

Die übrigen, in den Fig. 5 bis 13 und Fig. 15 bis 22 gezeigten Komponenten des Stators 1 entsprechen hinsichtlich ihres Aufbaus aus zwei Formleitern 5, einem Verbinder 9b bis 9d, 10a bis 10f, 11a bis 11g, der abstehende Abschnitte 15a, 15b und einen Übergangsabschnitt 16 aufweist, und zwei Verbindungselementen 17, die jeweils einen abstehenden Abschnitt 18 und einen Fügeabschnitt 19 umfassen, der in Fig. 4 gezeigten Komponente, wobei jedoch jeweils ein anderer Versatz in Radialrichtung und/oder Umfangsrichtung realisiert wird. Obwohl die abstehenden Abschnitte 15a, 15b, 18 hier schräg, also mit konstanter Steigungshöhe in Axialrichtung, dargestellt sind, können die abstehenden Abschnitte 15a, 15b, 18 jeweils oder auch einzeln eine abweichende Form aufweisen, beispielsweise entlang der Axialrichtung gebogen sein.

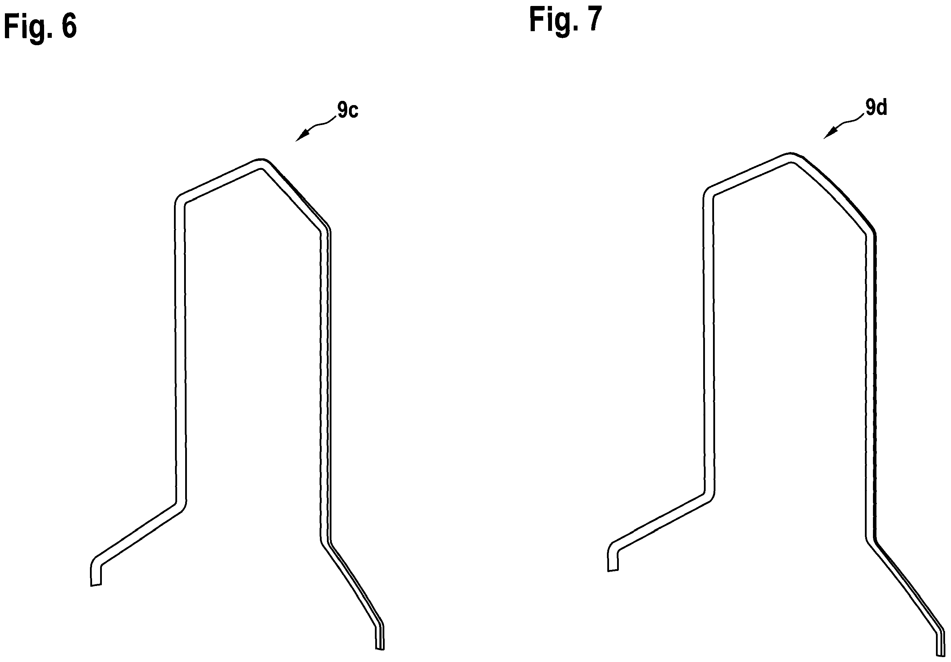

Die in Fig. 4 bis Fig. 7 gezeigten ersten Verbinder 9a bis 9d realisieren jeweils den Versatz um sechs Nuten 4 in Umfangsrichtung und den Versatz um eine Schicht 6a bis 9h. Der in Fig. 4 gezeigte erste Verbinder 9a realisiert den Versatz von der achten Schicht 6h zur siebten Schicht 7g. Der in Fig. 5 gezeigte erste Verbinder 9b realisiert den Versatz von der fünften Schicht 6e zur sechsten Schicht 6f. Der in Fig. 6 gezeigte erste Verbinder 9c realisiert den Versatz von der vierten Schicht 6d zur dritten Schicht 6d. Der in Fig. 7 gezeigte erste Verbinder 9d realisiert den Versatz von der ersten Schicht 6a zur zweiten Schicht 6b.

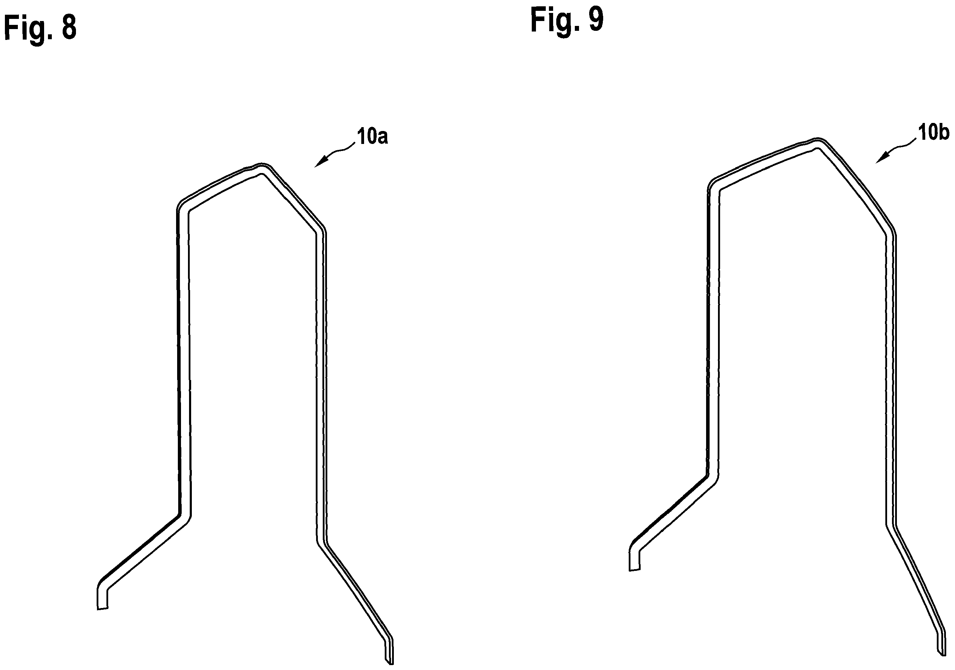

Fig. 8 bis Fig. 12 zeigen jeweils durch einen zweiten Verbinder 10a bis 10f verbundene Formleiter 5.

Fig. 8 zeigt den zweiten Verbinder 10a und Fig. 9 den zweiten Verbinder 10b. Beide Verbinder 10a, 10b realisieren den Versatz in Radialrichtung von der achten Schicht 6h zur sechsten Schicht 6f. Der zweite Verbinder 10a realisiert einen Versatz in Umfangsrichtung um fünf Nuten 4, wohingegen der zweite Verbinder 10b einen Versatz um sieben Nuten 4 realisiert. Wie einem Vergleich von Fig. 8 und Fig. 9 zu entnehmen ist, ist der zweite Verbinder 10a axial kürzer als der zweite Verbinder 10b. Dadurch kann der zweite Verbinder 10a im ersten Pfad 7a an derselben Radialposition axial weiter innen als der der zweite Verbinder 10b im zweiten Pfad 7b angeordnet werden. Dies gilt analog für den zweiten Verbinder 10a im dritten Pfad 7c und den zweiten Verbinder 10b im vierten Pfad 7d.

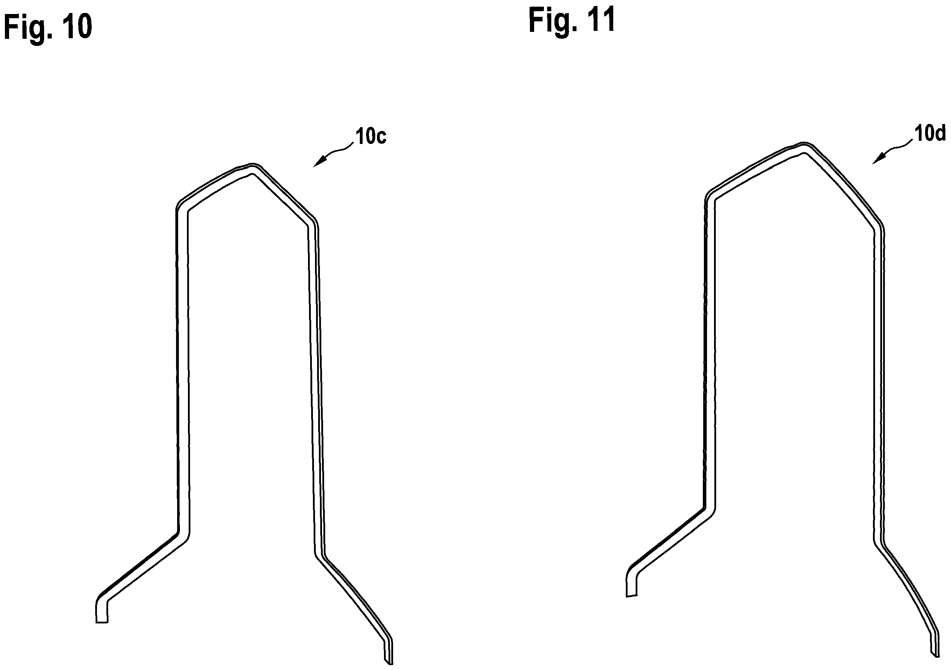

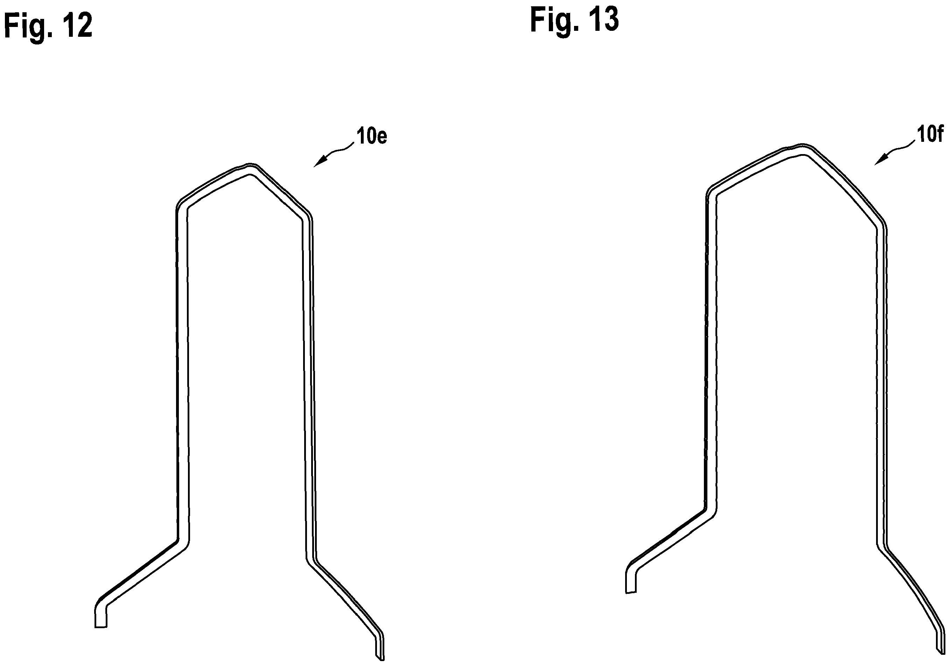

Fig. 10 zeigt den zweiten Verbinder 10c und Fig. 11 den zweiten Verbinder 10d. Beide zweite Verbinder 10c, 10d realisieren den Versatz in Radialrichtung von der fünften Schicht 6e zur dritten Schicht 6c. Fig. 12 zeigt den zweiten Verbinder 10e und Fig. 13 den zweiten Verbinder 10f. Beide zweiten Verbinder 10e, 10f realisieren den Versatz in Radialrichtung von der vierten Schicht 6d zur zweiten Schicht 6b. Analog zu den zweiten Verbindern 10a, 10b realisieren die zweiten Verbinder 10c, 10e den Versatz in Umfangsrichtung um fünf Nuten 4 und die zweiten Verbinder 10d, 10f den Versatz in Umfangsrichtung um sieben Nuten 4. Auch hier sind die zweiten Verbinder 10c, 10e axial kürzer als die zweiten Verbinder 10d, 10f, sodass die zweiten Verbinder 10c, 10e im ersten Pfad 7a und im dritten Pfad 7c an derselben Radialposition axial weiter innen als die zweiten Verbinder 10d, 10f im zweiten Pfad 7b und im vierten Pfad 7d angeordnet sind.

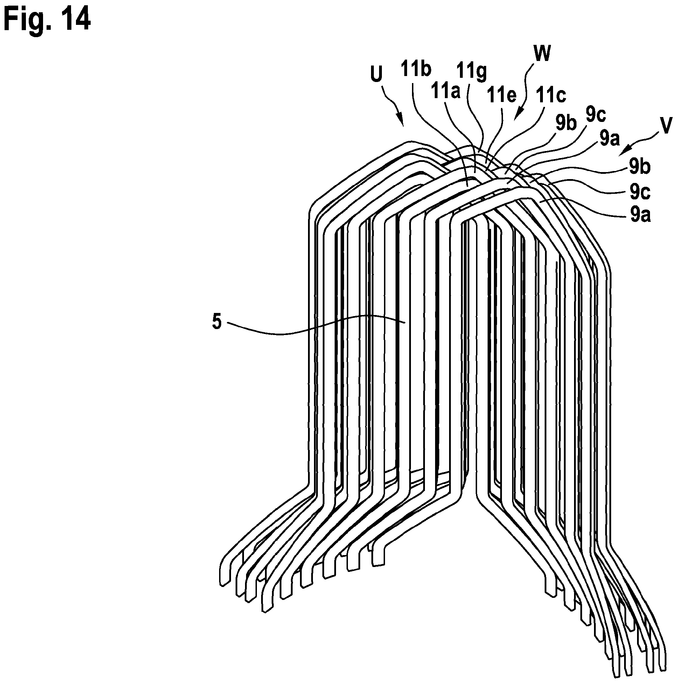

Fig. 14 zeigt mehrere durch erste Verbinder 9a bis 9d und dritte Verbinder 11a bis 11c, 11e, 11g verbundene Formleiter 5 der Phase W des in Fig. 1 gezeigten Stators, wobei die dritten Verbinder 11d, 11f, 11h in der Darstellung gemäß Fig. 14 verdeckt sind.

Gut zu erkennen ist dabei, dass der dritte Verbinder 11b zur Reduzierung des Wicklungsüberhangs axial weiter innen als der dritte Verbinder 11a angeordnet ist, welcher - wie der dritte Verbinder 11b - ebenfalls Formleiter 5, die in der siebten Schicht 6g und der achten Schicht 6h angeordnet sind, verbindet. Dies gilt entsprechend für die Anordnung der dritten Verbinder 11c, 11d, welche in der fünften Schicht 6e und in der sechsten Schicht 6f angeordnete Formleiter 5 verbinden, für die Anordnung der dritten Verbinder 11e, 11f, welche in der dritten Schicht 6c und in der vierten Schicht 6d angeordnete Formleiter 5 verbinden, und die Anordnung der dritten Verbinder 11g, 11h, welche in der ersten Schicht 11a und in der zweiten Schicht 11b angeordnete Formleiter 5 verbinden.

Im Hinblick auf die im Wesentlichen U-förmige Gestalt der durch die dritten Verbinder 11a bis 11h verbundenen Paare von Formleitern 5, kann eine solche axiale Anordnung der Paare auch als "U-in-U-Formleiter" oder "U-inside-U-Pin" bezeichnet werden. Die Ausführungen zu den dritten Verbindern 11a bis 11h anhand von Fig. 14 lassen sich auch auf die Anordnung der zweiten Verbinder 10a bis 10f übertragen.

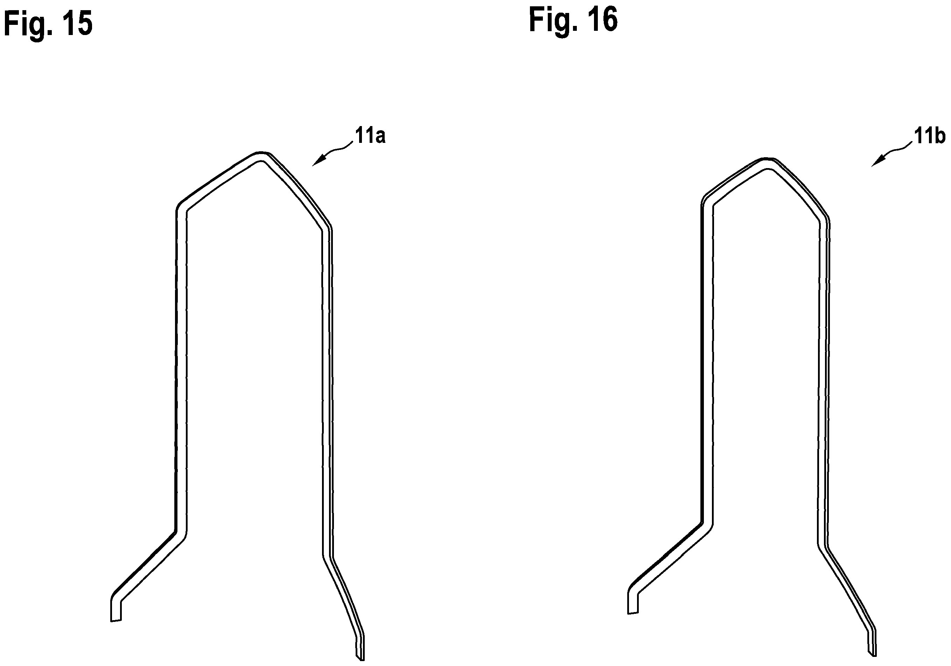

Fig. 15 bis Fig. 22 zeigen jeweils durch einen dritten Verbinder 11a bis 11h verbundene Formleiter 5.

Fig. 15 zeigt den dritten Verbinder 11a und Fig. 16 den dritten Verbinder 11b. Beide Verbinder 11a, 11b realisieren den Versatz in Radialrichtung von der achten Schicht 6h zur siebten Schicht 6g. Der dritte Verbinder 11a realisiert einen Versatz in Umfangsrichtung um sieben Nuten 4, wohingegen der dritte Verbinder 11b einen Versatz um fünf Nuten 4 realisiert. Wie einem Vergleich von Fig. 15 und Fig. 16 zu entnehmen ist, ist der dritte Verbinder 11a axial kürzer als der dritte Verbinder 11b, um die dritten Verbinder 11a, 11b wie zuvor beschrieben an derselben Radialposition axial ineinander anzuordnen.

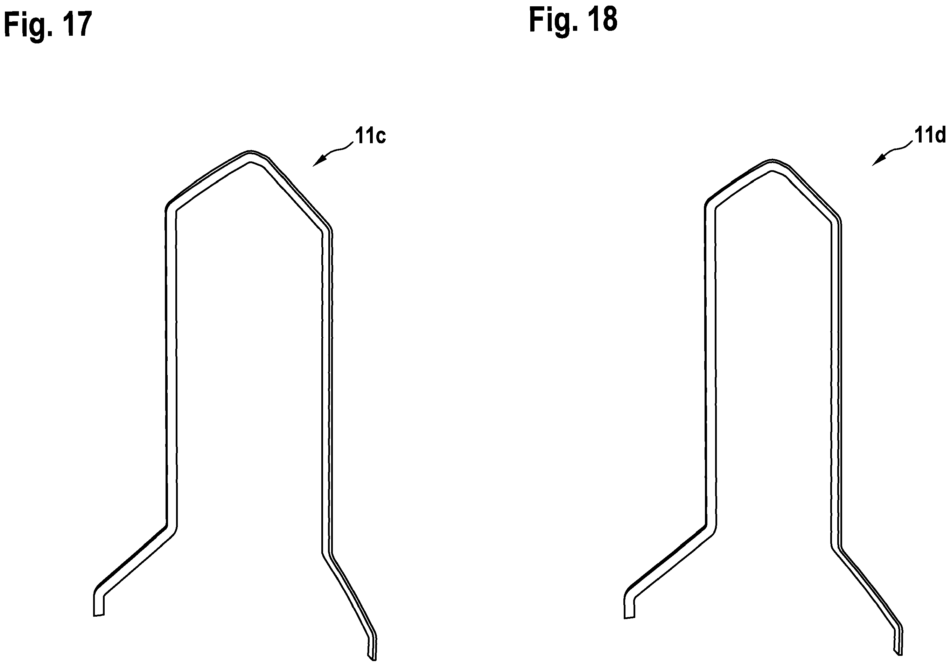

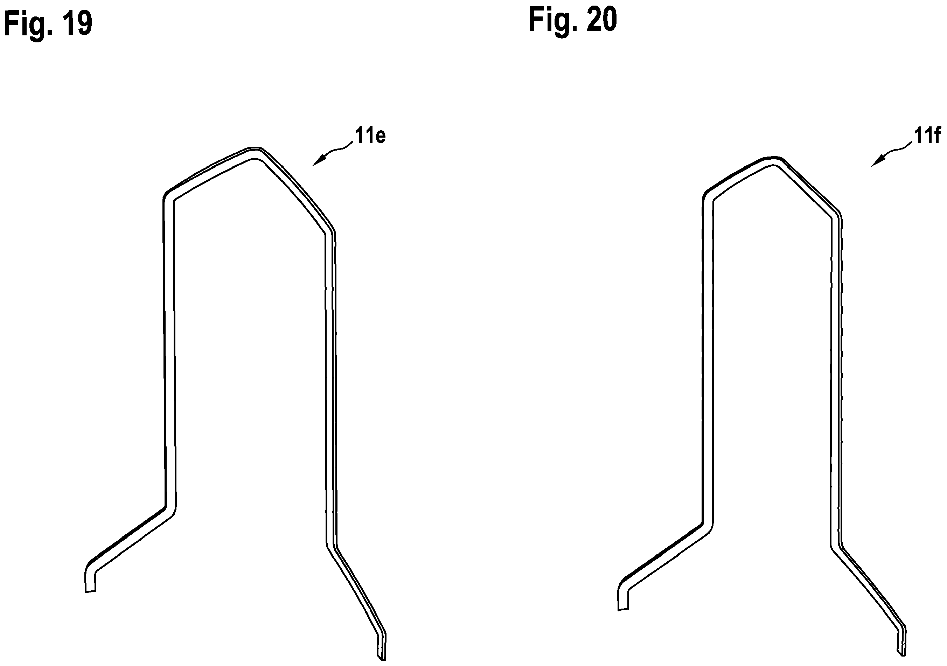

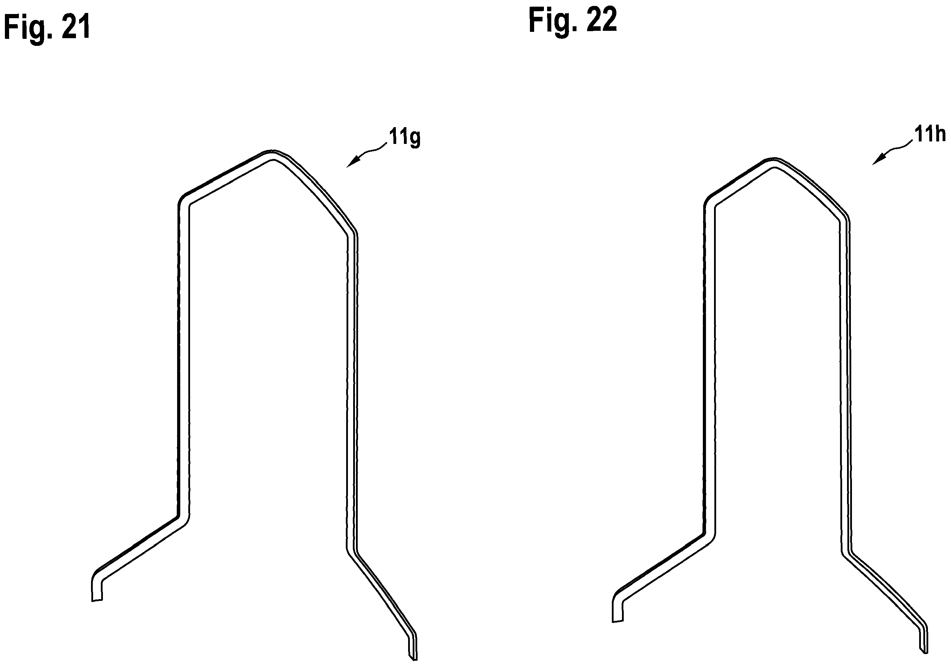

Fig. 17 zeigt den dritten Verbinder 11c und Fig. 18 den dritten Verbinder 11d. Beide dritte Verbinder 11c, 11d realisieren den Versatz in Radialrichtung von der fünften Schicht 6e zur sechsten Schicht 6f. Fig. 19 zeigt den dritten Verbinder 11e und Fig. 20 den dritten Verbinder 11f. Beide dritten Verbinder 11e, 11f realisieren den Versatz in Radialrichtung von der vierten Schicht 6d zur dritten Schicht 6c. Fig. 21 zeigt den dritten Verbinder 11g und Fig. 22 den dritten Verbinder 11h. Beide dritten Verbinder 11g, 11h realisieren den Versatz in Radialrichtung von der ersten Schicht 6a zur zweiten Schicht 6b. Analog zu den dritten Verbindern 11a, 11b realisieren die dritten Verbinder 11c, 11e, 11g den Versatz in Umfangsrichtung um sieben Nuten 4 und die dritten Verbinder 11d, 11f, 11h den Versatz in Umfangsrichtung um fünf Nuten 4.

Mithin kann die mehrpfadige Wicklungsstruktur des Stators 1 mit nur vier Typen von ersten Verbindern 9a bis 9d, sechs Typen von zweiten Verbindern 10a bis 10f und acht Typen von dritten Verbindern 11a bis 11h realisiert werden. Da die durch die vorgenannten Verbinder 9a bis 9d, 10a bis 10f und 11a bis 11h verbundenen Formleiter 5 identisch sein können, ist wegen der geringen Anzahl von nur achtzehn Typen eine einfache und gut automatisierbare Fertigung des Stators 1 möglich. Zudem liegen die bezüglich der Reihenschaltung äußeren Formleiter 5 der Pfade 7a bis 7d in einem kleinen Verbindungsfenster (siehe Nuten 4 mit den Nummern 13 bis 34 in Fig. 3a und Fig. 3b), wodurch eine bauraumsparende Anschlusseinrichtung verwendet werden kann. Vorteilhaft ist ferner, dass die in Fig. 3a und Fig. 3b mit einem "o" gekennzeichneten äußeren Formleiter 5, die zum Anschluss an einen Sternpunktverbinder dienen können, jeweils nur eine Kreuzung mit den mit "x" gekennzeichneten Formleiter 5, die als Phasenanschlüsse an einen Wechselrichter dienen können, aufweisen, was die konstruktive Struktur der Anschlusseinrichtung vereinfacht.

Wieder mit Bezug zu Fig. 2 ist zu erkennen, dass einige der Formleiter 5 in den ersten Schichten 6a und siebten Schichten 6g einiger Nuten 4 an der ersten Stirnseite 2a nicht mit durch erste Verbinder 9a bis 9d, zweite Verbinder 10a bis 10f oder dritte Verbinder 11a bis 11h verbunden sind. In diesen Bereichen befinden bezüglich der Reihenschaltung äußere Formleiter 5 eines jeweiligen Pfades 7a bis 7d. Diese äußeren Formleiter sind in Fig. 3a und Fig. 3b mit den Symbolen "o" und "x" gekennzeichnet.

Das freie Ende dieser Formleiter 5 an der ersten Stirnseite 2a steht aus dem Statorkern 3 über die Übergansabschnitte 16 (siehe Fig. 4) hinaus verlängert hervor. Das freie Ende der äußeren Formleiter 5 weist einen sich in Axialrichtung und Umfangsrichtung erstreckenden stumpfwinklig abstehenden Abschnitt 20a und einen sich an den abstehenden Abschnitt 20a anschließenden geraden Abschnitt 20b, der sich in Axialrichtung weiter als die Übergangsabschnitte 16 erstreckt, auf. Die geraden Abschnitte 20b dienen zur elektrischen Verbindung mit der Anschlusseinrichtung.

An der zweiten Stirnseite 2b schließt sich an den äußeren Formleiter 5 ein Verbindungselement 17 mit einem abstehenden Abschnitt 18 und einem Fügeabschnitt 19 entsprechend Fig. 4 an. Der Fügeabschnitt 19 ist mit dem Fügeabschnitt 19 des zweitäußeren Formleiters 5 des entsprechenden Pfades 7a bis 9d stoffschlüssig verfügt.

Schließlich sind Fig. 1 und Fig. 2 auch Nutkästen 20c zu erkennen, welche sich durch die Nuten 4 erstrecken, die Formleiter 5 umgeben und die Nuten 4 auskleiden. Die Nutkästen dienen der elektrischen Isolierung der Formleiter 5 gegenüber dem Statorkern 3. Typischerweise sind die Nutkästen 20c aus Isolationspapier gefertigt.

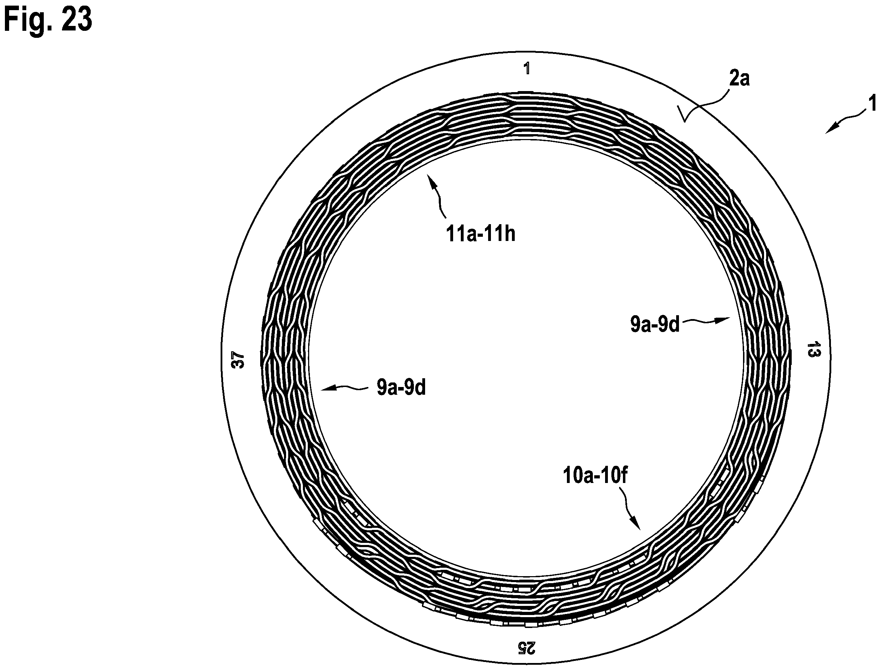

Fig. 23 ist eine Frontalansicht auf die erste Stirnseite 2a des Stators 1. Zu erkennen sind dabei insbesondere die ersten Verbinder 9a bis 9d, die zweiten Verbinder 10a bis 10f und die dritten Verbinder 11a bis 11h.

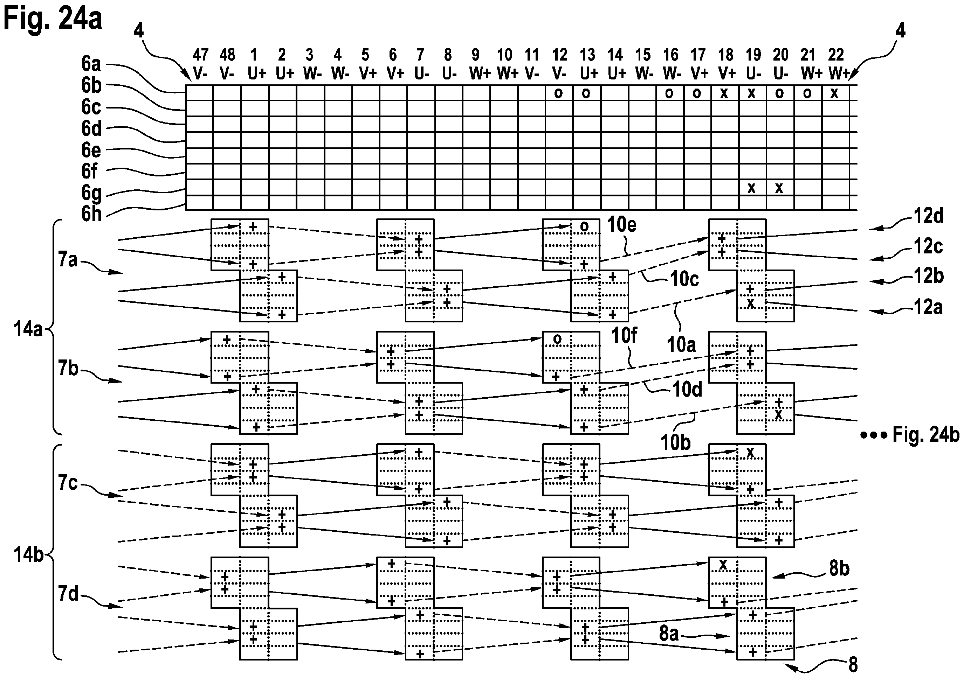

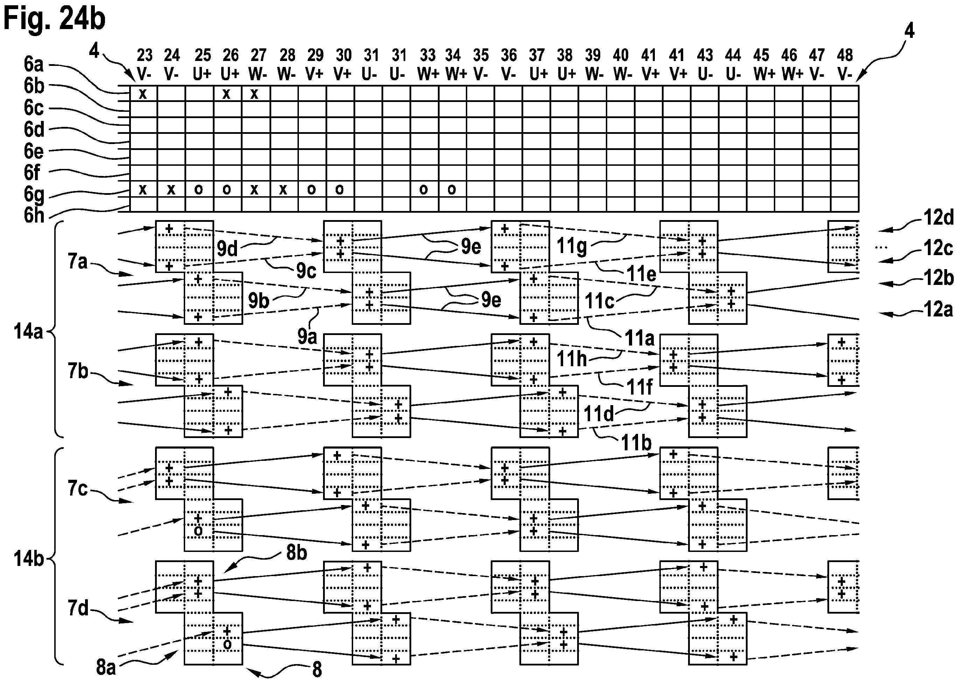

Fig. 24a und Fig. 24b zeigen ein Wicklungsschema eines zweiten Ausführungsbeispiels eines Stators 1. Die Art und Weise der Darstellung entspricht dabei Fig. 3a und Fig. 3b. Auf das zweite Ausführungsbeispiel lassen sich die Ausführungen zum ersten Ausführungsbeispiel übertragen, soweit im Folgenden keine Abweichungen beschrieben sind. Dabei sind gleiche oder gleichwirkende Komponenten mit denselben Bezugszeichen versehen.

Der Stator 1 gemäß dem zweiten Ausführungsbeispiel ist ein links-gesehnter Stator 1. Dementsprechend erstreckt sich jede Teilwicklungszone 8a, 8b über wenigstens zwei unmittelbar benachbarte Nuten 4, wobei jede Teilwicklungszone in Radialrichtung einen Versprung (V = 1) um eine Nut 4 aufweist. Die Versprünge in den Wicklungszonen 8 haben - von radial innen nach radial außen betrachtet - jeweils ein Orientierung nach links bzw. gegen den Uhrzeigersinn aus Sicht der ersten Stirnseite 2a und erfolgen nach vier Schichten 6e bis 6h (L/2).

Zur Realisierung eines solchen links-gesehnten Stators 1 werden die im ersten Ausführungsbeispiel beschriebenen ersten Verbinder 9a bis 9d und dritten Verbinder 11a bis 11h verwendet, die lediglich jenseits des Versprungs in der ersten Schicht 6a bis zur vierten Schicht 6d in Umfangsrichtung um eine Nut 4 versetzt angeordnet sind.

Hinsichtlich der zweiten Verbinder 10a bis 10f ergeben sich folgende Abweichungen: Die zweiten Verbinder 10a, 10e, die den Versprung nicht überstreichen, im ersten Pfad 7a und im dritten Pfad 7c realisieren einen Versatz um fünf Nuten 4 (N·q-1), wohingegen die zweiten Verbinder 10b, 10f, die den Versprung nicht überstreichen, im zweiten Pfad 7b und im vierten Pfad 7d einen Versatz um sieben Nuten 4 (N·q+1) realisieren. Der zweite Verbinder 10c, der den Versprung überstreicht, im ersten Pfad 7a und im dritten Pfad 7c realisiert einen Versatz um vier Nuten 4 (N-q-2), wohingegen der zweite Verbinder 10d, der den Versprung überstreicht, im zweiten Pfad 7b und im vierten Pfad 7d einen Versatz um sechs Nuten 4 (N·q) realisiert. Somit ist es auch beim zweiten Ausführungsbeispiel möglich, die zweiten Verbinder 10a und 10b, die zweiten Verbinder 10c, 10d und die zweiten Verbinder 10e, 10f axial ineinander anzuordnen.

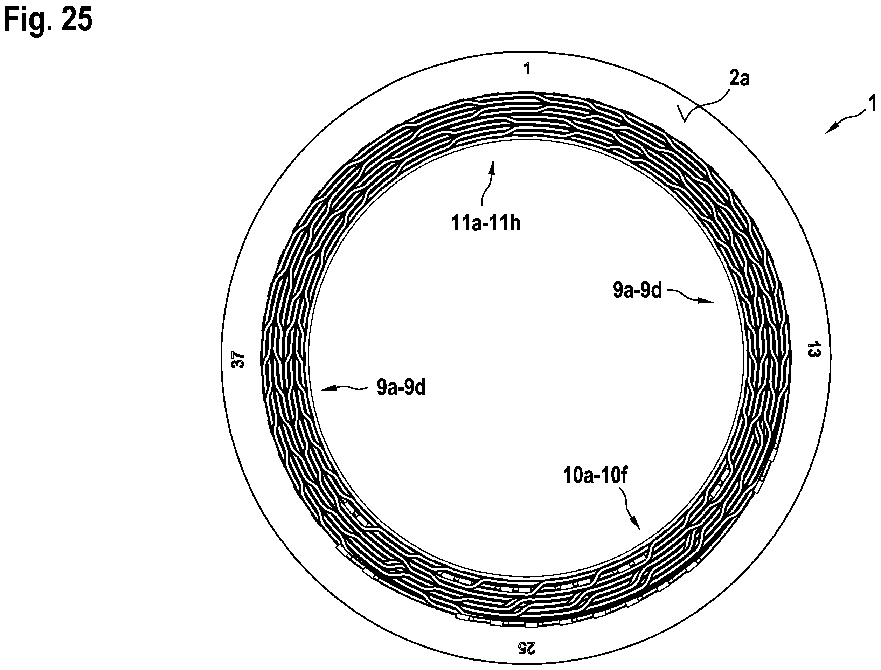

Fig. 25 ist eine Frontalansicht auf die erste Stirnseite 2a des Stators 1 gemäß dem zweiten Ausführungsbeispiel. Zu erkennen sind dabei insbesondere die ersten Verbinder 9a bis 9d, die zweiten Verbinder 10a bis 10f und die dritten Verbinder 11a bis 11h.

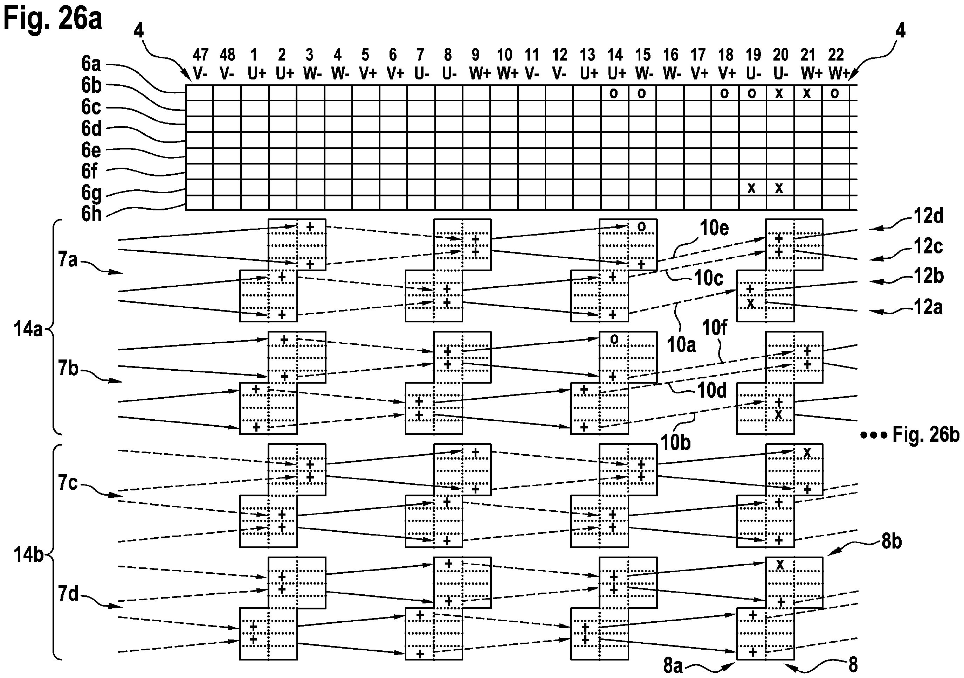

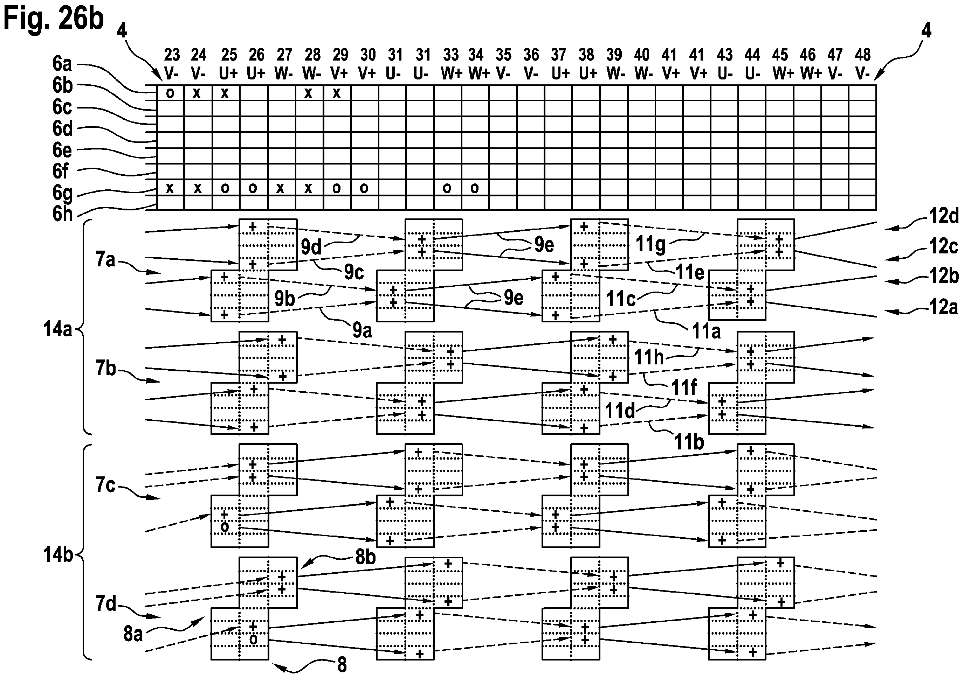

Fig. 26a und Fig. 26b zeigen ein Wicklungsschema eines dritten Ausführungsbeispiels eines Stators 1. Die Art und Weise der Darstellung entspricht dabei Fig. 3a und Fig. 3b. Auf das dritte Ausführungsbeispiel lassen sich die Ausführungen zum ersten Ausführungsbeispiel übertragen, soweit im Folgenden keine Abweichungen beschrieben sind. Dabei sind gleiche oder gleichwirkende Komponenten mit denselben Bezugszeichen versehen.

Der Stator 1 gemäß dem dritten Ausführungsbeispiel ist ein rechts-gesehnter Stator 1. Dementsprechend erstreckt sich jede Teilwicklungszone 8a, 8b über wenigstens zwei unmittelbar benachbarte Nuten 4, wobei jede Teilwicklungszone in der Radialrichtung einen Versprung (V = 1) um eine Nut 4 aufweist. Die Versprünge in den Wicklungszonen 8 haben - von radial innen nach radial außen betrachtet - jeweils ein Orientierung nach rechts bzw. im Uhrzeigersinn aus Sicht der ersten Stirnseite 2a und erfolgen nach vier Schichten 6e bis 6h (L/2).

Zur Realisierung eines solchen rechts-gesehnten Stators 1 werden die im ersten Ausführungsbeispiel beschriebenen ersten Verbinder 9a bis 9d und dritten Verbinder 11a bis 11h verwendet, die lediglich jenseits des Versprungs in der ersten Schicht 6a bis zur vierten Schicht 6d in Umfangsrichtung um eine Nut 4 versetzt angeordnet sind.

Hinsichtlich der zweiten Verbinder 10a bis 10f ergeben sich folgende Abweichungen: Die zweiten Verbinder 10a, 10e, die den Versprung nicht überstreichen, im ersten Pfad 7a und im dritten Pfad 7c realisieren einen Versatz um fünf Nuten 4 (N·q-1), wohingegen die zweiten Verbinder 10b, 10f, die den Versprung nicht überstreichen, im zweiten Pfad 7b und im vierten Pfad 7d einen Versatz um sieben Nuten 4 (N·q+1) realisieren. Der zweite Verbinder 10c, der den Versprung überstreicht, im ersten Pfad 7a und im dritten Pfad 7c realisiert einen Versatz um sechs Nuten 4 (N·q), wohingegen der zweite Verbinder 10d, der den Versprung überstreicht, im zweiten Pfad 7b und im vierten Pfad 7d einen Versatz um acht Nuten 4 (N·q+2) realisiert. Somit ist es auch beim dritten Ausführungsbeispiel möglich, die zweiten Verbinder 10a und 10b, die zweiten Verbinder 10c, 10d und die zweiten Verbinder 10e, 10f axial ineinander anzuordnen.

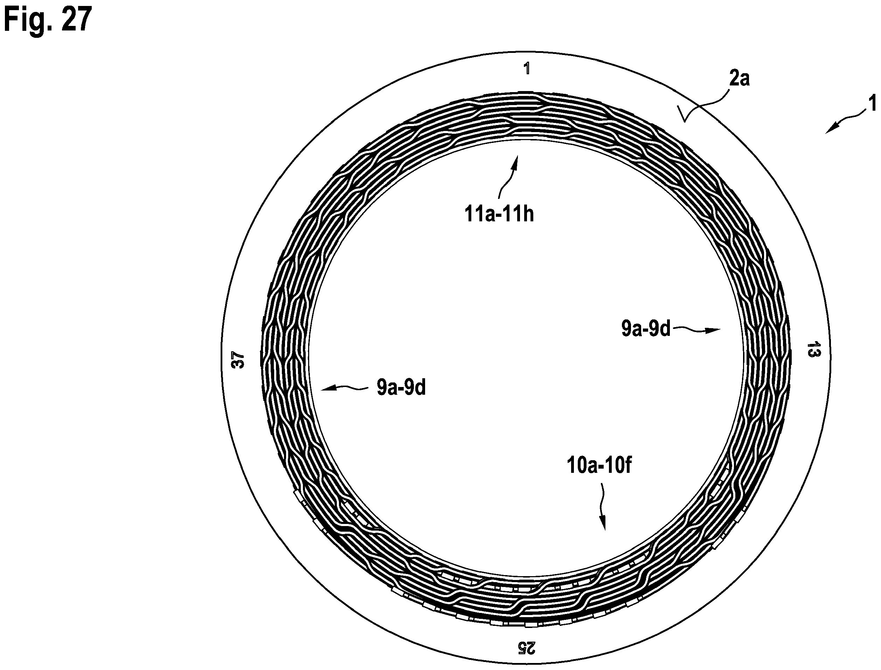

Fig. 27 ist eine Frontalansicht auf die erste Stirnseite 2a des Stators 1 gemäß dem dritten Ausführungsbeispiel. Zu erkennen sind dabei insbesondere die ersten Verbinder 9a bis 9d, die zweiten Verbinder 10a bis 10f und die dritten Verbinder 11a bis 11h.

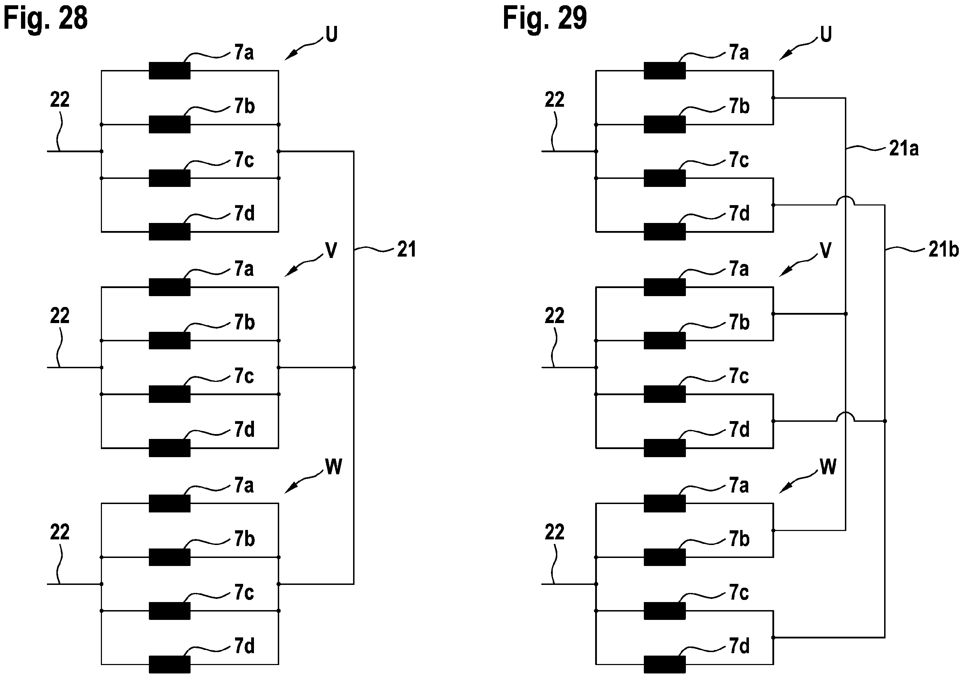

Fig. 28 und Fig. 29 sind jeweils ein Schaltbild der Pfade 7a bis 7d eines Stators 1 gemäßen einem der zuvor beschrieben Ausführungsbeispiele.

Fig. 28 zeigt für eine jeweilige Phase U, V, W, dass deren Pfade 7a bis 7d parallelgeschaltet und durch einen Sternpunktverbinder 21 zu einem Sternpunkt verbunden sind. Auf der dem Sternpunktverbinder 21 gegenüberliegenden Seite einer jeweiligen Parallelschaltung ist ein Phasenanschluss 22 vorgesehen.

Fig. 29 zeigt für eine jeweilige Phase U, V, W, dass deren Pfade 7a bis 7d an einem ihrer Enden parallel verbunden und an einem Phasenanschluss 22 angeschlossen sind. Die anderen Enden der Pfade 7a bis 7d sind lediglich paarweise parallel verbunden, sodass mittels zwei Sternpunktverbindern 21a, 21b zwei Sternpunkte ausgebildet sind. Dabei verbindet der Sternpunktverbinder 21a die ersten Pfade 7a und die zweiten Pfade 7b einer jeweiligen Phase U, V, W und der Sternpunktverbinder 21b die dritten Pfade 7c und die vierten Pfade 7d einer jeweiligen Phase U, V, W.

Die in Fig. 28 und 29 gezeigten Sternpunktverbinder 21a, 21b und Phasenanschlüsse 22 können bei allen zuvor beschriebenen Ausführungsbeispielen durch die vorgenannte Anschlusseinrichtung, die an der ersten Stirnseite 2a angeordnet ist, realisiert werden. Selbstverständlich ist es gemäß alternativen Ausgestaltungen auch möglich, dass die Pfade 7a bis 7d einer jeweiligen Phase U, V, W in Reihe geschaltet sind und/oder dass anstelle einer Sternschaltung eine Dreieckschaltung realisiert wird.

Es ist gemäß einem weiteren Ausführungsbeispiel ferner möglich, dass ein Stator eine Lochzahl q = 1 aufweist, wobei die dritten Verbinder dann entfallen. Ein solcher Stator weist dann mindestens P = 4 Polpaare und wenigstens zwölf Nuten auf. Typischerweise werden dann zwei Pfade je Phase realisiert.

Es ist gemäß einem weiteren Ausführungsbeispiel auch möglich, dass ein Stator eine Lochzahl q = 3 aufweist. Dann sind typischerweise mindestens P = 12 Polpaare und wenigstens 108 Nuten vorgesehen. Typischerweise werden dann sechs Pfade je Phase realisiert. In einer jeweiligen Gruppe sind bei einer Lochzahl q = 3 drei Anordnungen und zwei dritte Verbinder vorgesehen, damit jede Gruppe alle drei Teilwicklungszonen belegt. Jeweils drei zweite und dritte Verbinder, die in derselben Wicklungszone an derselben Radialposition angeordneten können dann axial ineinander angeordnet werden, sodass "U-in-U-in-U-Formleiter" ausgebildet werden.

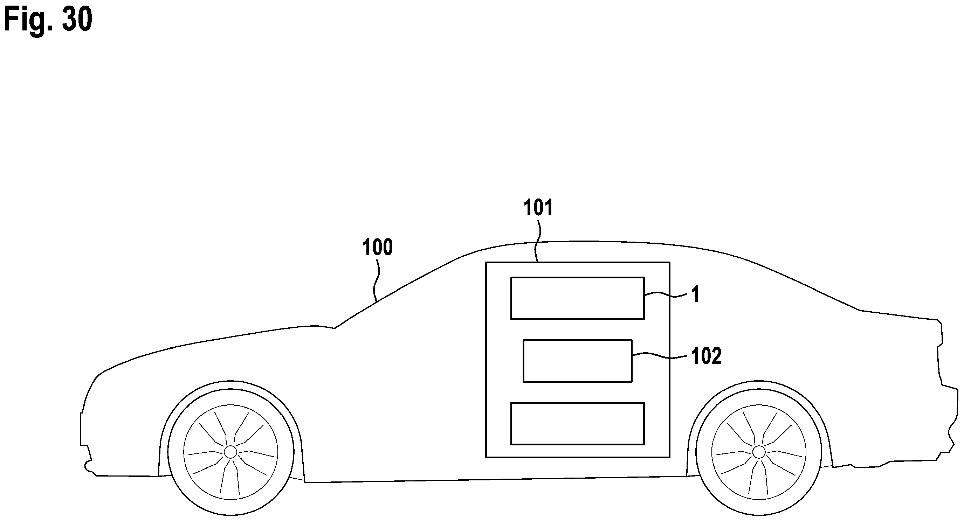

Fig. 30 ist eine Prinzipskizze eines Fahrzeugs 100 mit einem Ausführungsbeispiel einer elektrischen Maschine 101.

Die elektrische Maschine 101 umfasst einen Stator 1 gemäß einem der zuvor beschriebenen Ausführungsbeispiele und einen drehbar innerhalb des Stators 1 angeordneten Rotor 102. Die elektrische Maschine 101 ist eine Drehfeldmaschine, beispielsweise eine permanenterregte Synchronmaschine oder eine Asynchronmaschine. Die elektrische 101 Maschine ist als Elektromotor ausgebildet.

Das Fahrzeug 100 ist ein teilweises oder vollständig elektrisch angetriebenes Fahrzeug, beispielsweise ein batterieelektrisches Fahrzeug (BEV) oder ein Hybridfahrzeug, wobei die elektrische Maschine 101 zum Antreiben des Fahrzeugs 100 eingerichtet ist.

Wie Fig. 3a und Fig. 3b ferner zu entnehmen ist, verläuft die jeweilige Gruppe 12 a - d nach einem Umlauf um den Stator und einem Verbinder 10a -10e in jeweils radial entgegengesetzter Richtung. Dadurch liegen die Formleiter 5 einer nachfolgenden Gruppe 12b - 12d, in Bezug auf die vorherige Gruppe 12a - 12c jeweils im Wechsel in direkt benachbarten Nuten der jeweils selben Teilwicklungszone 8a,b, bzw. in 3 Schichten entfernten Nuten derselben Teilwicklungszone 8a,b.

Zum Beispiel ist ein Formleiter 5 der Gruppe 12a in der Nut mit der Nummer "2" in der 8. Schicht 6h angeordnet. Der Formleiter 5 der nachfolgenden Gruppe 12b, der ebenfalls in der Nut mit Nummer "2" angeordnet ist, ist in der 5. Schicht 6e angeordnet. Anschließend ist ein anderer Formleiter 5 der Gruppe 12a in der Nut mit der Nummer "8" in der 7. Schicht 6g angeordnet. Der Formleiter 5 der nachfolgenden Gruppe 12b, der ebenfalls in der Nut mit Nummer "8" angeordnet ist, ist in der 6. Schicht 6f, also in einer direkt benachbarten Schicht bezüglich des Formleiter 5 der Gruppe 12a angeordnet.

## Patentansprüche

1. Stator (1) für eine elektrische Maschine (101), wobei
- der Stator (1) eine Anzahl N Phasen (U, V, W), eine Anzahl P Polpaare und eine Lochzahl q aufweist, wobei N ≥ 3 und P ≥ 2 und q ≥ 1, wobei
- der Stator (1) einen Statorkern (3) mit wenigstens 2·N·P q Nuten (4) und eine Anzahl 2·N·P·q·L Formleiter (5), die in einer Anzahl L Schichten (6a-h) radial geschichtet in den Nuten (4) angeordnet sind, wobei L ≥ 4 und gerade ist, umfasst, wobei
- die Formleiter (5) je Phase 2 q Pfade (7a-d), die in Reihe oder parallel miteinander verschaltbar sind, ausbilden und in 2P Wicklungszonen (8), die sich jeweils radial über L Schichten (6a-h) und in Umfangsrichtung über wenigstens q unmittelbar benachbarte Nuten (4) erstrecken, angeordnet sind, wobei
- die Formleiter (5) jedes Pfads in einer Reihenschaltung verschaltet sind, die durch an beiden Stirnseiten (2a, 2b) der Statorkerns angeordnete Verbinder (9a-e, 10a-f, 11a-g) realisiert ist, wobei
- jeder Pfad L/2 Gruppen (12a-d) von aufeinanderfolgend in Reihe geschalteten Formleitern (5) umfasst, wobei
- jede Gruppe (12a-d) durch wenigstens eine Anordnung (13a, 13b) von wenigstens vier Formleitern (5) ausgebildet ist, die abwechselnd in zwei unmittelbar benachbarten Schichten (6a-g) angeordnet und durch erste Verbinder (9a-e), die jeweils in Umfangsrichtung einen Versatz um q·N Nuten (4) und in Radialrichtung einen Versatz um eine Schicht realisieren, in Reihe geschaltet sind, **dadurch gekennzeichnet, dass**
- Paare von bezüglich der Reihenschaltung benachbarten Gruppen (12a-d) jeweils durch einen zweiten Verbinder (10a-f) verbunden sind, der in Umfangsrichtung einen Versatz um mehrere Nuten (4) und in Radialrichtung einen Versatz um zwei Schichten realisiert.

2. Stator nach Anspruch 1, wobei
- q ≥ 2 und jede Wicklungszone (8) eine erste bis q-te Teilwicklungszone (8a, 8b) aufweist, wobei
- sich jede Teilwicklungszone (8a, 8b) sich über die L Schichten (6a-g) erstreckt, wobei
- die Teilwicklungszonen (8a, 8b) einer jeweiligen Wicklungszone (8) in Umfangsrichtung unmittelbar benachbart sind.

3. Stator nach Anspruch 2, wobei
sich jede Teilwicklungszone (8a, 8b) über genau eine Nut (4) erstreckt.

4. Stator nach Anspruch 3, wobei
die zweiten Verbinder (10a-f), die Gruppen (12a-d) eines jeweiligen Pfades (7a-d) verbinden, denselben Versatz um mehrere Nuten (4) realisieren und/oder
- zweite Verbinder (10a, 10c, 10e) wenigstens eines der Pfade (7a, 7c) einen Versatz um N q-1 Nuten (4) realisieren und/oder
- zweite Verbinder (10b, 10d, 10f) wenigstens eines der Pfade (7b, 7d) einen Versatz um N·q+1 Nuten (4) realisieren.

5. Stator nach Anspruch 2, wobei
sich jede Teilwicklungszone (8a, 8b) über wenigstens zwei unmittelbar benachbarte Nuten (4) erstreckt und in Radialrichtung eine Anzahl V von Versprüngen um jeweils eine Nut (4) aufweist, wobei V ≥ 1.

6. Stator nach Anspruch 5, wobei
die Versprünge
- dieselbe Orientierung in Umfangsrichtung aufweisen und/oder
- nach jeweils L/[V+1] Schichten (6a-d) erfolgen und/oder
zweite Verbinder (10a, 10b, 10e, 10f) wenigstens eines der Pfade (7a-d) einen Versatz um N q-1 Nuten (4) und/oder N q-1 Nuten (4) realisieren, wenn sie keinen Versprung in Radialrichtung überstreichen.

7. Stator nach Anspruch 5 oder 6, wobei
zweite Verbinder (10c, 10d) wenigstens eines der Pfade (7a-d) einen Versatz um
- N q-2 Nuten und/oder N·q Nuten (4) oder
- N·q+2 Nuten und/oder N·q Nuten (4)
realisieren, wenn sie einen Versprung in Radialrichtung überstreichen.

8. Stator nach einem der Ansprüche 2 bis 7, wobei
- jede Gruppe (12a-d) q Anordnungen (13a, 13b) umfasst, die jeweils in einer anderen der Teilwicklungszonen (8a, 8b) angeordnet sind, wobei
- bezüglich der Reihenschaltung unmittelbar benachbarte Anordnungen (13a, 13b) einer jeweiligen Gruppe (12a-d) durch einen dritten Verbinder (11a-g), der in Umfangsrichtung einen Versatz um eine Anzahl ungleich N·q Nuten (4) und in Radialrichtung einen Versatz um eine Schicht (6a-g) realisiert, verbunden sind.

9. Stator nach Anspruch 8, wobei
die dritten Verbinder (11a-g) eines jeweiligen Pfades (7a-d) denselben Versatz in Umfangsrichtung realisieren und/oder- dritte Verbinder (11a, 11c, 11e, 11g) wenigstens eines der Pfade (7a, 7c) einen Versatz um N·q+1 Nuten (4) realisieren und/oder
- dritte Verbinder (11b, 11d, 11f, 11h) wenigstens eines der Pfade (7b, 7d) einen Versatz um N q-1 Nuten (4) realisieren.

10. Stator nach Anspruch 8 oder 9, wobei
dritte Verbinder (11a-g) unterschiedlicher Pfade (7a-d), welche dritten Verbinder (11a-g) zwischen denselben Wicklungszonen (8) Formleiter (5) in denselben Schichten (6a-g) verbinden, derart angeordnet sind, dass ein dritter Verbinder (11b, 11d, 11f, 11h), welcher einen geringen Versatz um die mehreren Nuten (4) realisiert als ein anderen dritter Verbinder (11a, 11c, 11e, 11g), axial weiter innen als der andere dritte Verbinder (11a, 11c, 11e, 11g) angeordnet ist.

11. Stator nach einem der vorhergehenden Ansprüche, wobei
zweite Verbinder (10a-f) unterschiedlicher Pfade (7a-d), welche zweiten Verbinder (10a-f) zwischen denselben Wicklungszonen (8) Formleiter (5) in denselben Schichten (6a-g) verbinden, derart angeordnet sind, dass ein zweiter Verbinder (10a, 10c, 10e), welcher einen geringen Versatz um die mehreren Nuten (4) realisiert als ein anderer zweiter Verbinder (10b, 10d, 10f), axial weiter innen als der andere zweite Verbinder (10b, 10d, 10f) angeordnet ist.

12. Stator nach einem der vorhergehenden Ansprüche, wobei
q gleichgroße Mengen (14a, 14b) von Pfaden (7a-d) jeweils bezügliches der Reihenschaltung dieselbe Folge von Verbindern (9a-e, 10a-f, 11a-h) aufweisen, die jeweils um N·q Nuten (4) gegeneinander versetzt ist.

13. Stator nach einem der vorhergehenden Ansprüche, wobei
die an einer der Stirnseiten (2a) des Statorkerns (3) angeordneten Verbinder (9a-d, 10a-f, 11a-h) jeweils einstückig mit den durch sie verbundenen Formleitern (5) ausgebildet sind und die an der anderen Stirnseite (2b) des Statorkerns (3) angeordneten Verbinder (9e) durch das, vorzugsweise stoffschlüssige, Verfügen von freien Enden von Verbindungselementen (17), die einstückig mit dem Formleiter (5) ausgebildet sind und sich an den Formleiter (5) anschließen, ausgebildet sind.

14. Stator nach einem der vorhergehenden Ansprüche, wobei
ein jeweiliger bezüglich der Reihenschaltung äußerer Formleiter (5) eines jeweiligen Pfades (7a-d) ein an einer der Stirnseiten (2a) des Statorkerns (3) hervorstehendes freies Ende aufweist und sich an der anderen Stirnseite (2b) ein Verbindungselement (17) an den Formleiter (5) anschließt, dessen freies Ende mit dem oder einem Verbindungselement (17), das an den zweitäußeren Formleiter (5) des Pfades (7a-7d) anschließt, verfügt ist.

15. Elektrische Maschine (101), umfassend einen Stator (1) nach einem der vorhergehenden Ansprüche und einen innerhalb des Stators (1) drehbar angeordneten Rotor (102).

## Claims

1. Stator (1) for an electric machine (101), wherein
- the stator (1) has a number N of phases (U, V, W), a number P of pole pairs and a number of slot per pole per phase q, where N ≥ 3 and P ≥ 2 and q ≥ 1, wherein
- the stator (1) comprises a stator core (3) having at least 2·N·P·q slots (4) and a number 2·N·P·q·L of shaped conductors (5) which are arranged in the slots (4) in a manner radially layered in a number L of layers (6ah), where L ≥ 4 and is even, wherein
- the shaped conductors (5) form for each phase 2·q paths (7a-d), which can be interconnected with each other in series or in parallel, and are arranged in 2P winding zones (8), which each extend radially over L layers (6ah) and in the circumferential direction over at least q directly adjacent slots (4), wherein
- the shaped conductors (5) of each path are interconnected in a series connection which is implemented by connectors (9a-e, 10a-f, 11a-g) arranged on the two end faces (2a, 2b) of the stator core, wherein
- each path comprises L/2 groups (12a-d) of shaped conductors (5) connected successively in series, wherein
- each group (12a-d) is formed by at least one arrangement (13a, 13b) of at least four shaped conductors (5) which are arranged alternately in two directly adjacent layers (6a-g) and are connected in series by first connectors (9a-e), which each implement an offset by q·N slots (4) in the circumferential direction and an offset by one layer in the radial direction, **characterized in that**
- pairs of groups (12a-d) which are adjacent in terms of the series connection are connected in each case by a second connector (10a-f) which implements an offset by a plurality of slots (4) in the circumferential direction and an offset by two layers in the radial direction.

2. Stator according to Claim 1, wherein
- q ≥ 2 and each winding zone (8) has a first to q-th sub-winding zone (8a, 8b), wherein
- each sub-winding zone (8a, 8b) extends over the L layers (6a-g), wherein
- the sub-winding zones (8a, 8b) of a respective winding zone (8) are directly adjacent in the circumferential direction.

3. Stator according to Claim 2, wherein
each sub-winding zone (8a, 8b) extends over precisely one slot (4).

4. Stator according to Claim 3, wherein
the second connectors (10a-f), which connect groups (12a-d) of a respective path (7a-d), implement the same offset by a plurality of slots (4) and/or
- second connectors (10a, 10c, 10e) of at least one of the paths (7a, 7c) implement an offset by N·q-1 slots (4) and/or
- second connectors (10b, 10d, 10f) of at least one of the paths (7b, 7d) implement an offset by N·q+1 slots (4) .

5. Stator according to Claim 2, wherein
each winding zone (8a, 8b) extends over at least two directly adjacent slots (4) and has a number V of offsets by in each case one slot (4), where V ≥ 1, in the radial direction.

6. Stator according to Claim 5, wherein
the offsets
- have the same orientation in the circumferential direction and/or
- occur after in each case L/[V+1] layers (6a-d) and/or
second connectors (10a, 10b, 10e, 10f) of at least one of the paths (7a-d) implement an offset by N·q-1 slots (4) and/or N·q-1 slots (4) if they do not cover any offset in the radial direction.

7. Stator according to Claim 5 or 6, wherein
second connectors (10c, 10d) of at least one of the paths (7a-d) implement an offset by
- N·q-2 slots and/or N·q slots (4) or
- N·q+2 slots and/or N·q slots (4)
if they cover an offset in the radial direction.

8. Stator according to one of Claims 2 to 7, wherein
- each group (12a-d) comprises q arrangements (13a, 13b) which are each arranged in a different one of the sub-winding zones (8a, 8b), wherein
- arrangements (13a, 13b) of a respective group (12a-d) which are directly adjacent in terms of the series connection are connected by a third connector (11a-g) which implements an offset by a number not equal to N-q slots (4) in the circumferential direction and implements an offset by one layer (6a-g) in the radial direction.

9. Stator according to Claim 8, wherein
the third connectors (11a-g) of a respective path (7a-d) implement the same offset in the circumferential direction and/or third connectors (11a, 11c, 11e, 11g) of at least one of the paths (7a, 7c) implement an offset by N·q+1 slots (4) and/or
- third connectors (11b, 11d, 11f, 11h) of at least one of the paths (7b, 7d) implement an offset by N-q-1 slots (4).

10. Stator according to Claim 8 or 9, wherein
third connectors (11a-g) of different paths (7a-d), which third connectors (11a-g) connect shaped conductors (5) in the same layers (6a-g) between the same winding zones (8), are arranged in such a way that one third connector (11b, 11d, 11f, 11h), which implements a smaller offset by the plurality of slots (4) than another third connector (11a, 11c, 11e, 11g), is arranged axially further to the inside than the other third connector (11a, 11c, 11e, 11g).

11. Stator according to one of the preceding claims, wherein
second connectors (10a-f) of different paths (7a-d), which second connectors (10a-f) connect shaped conductors (5) in the same layers (6a-g) between the same winding zones (8), are arranged in such a way that one second connector (10a, 10c, 10e), which implements a smaller offset by the plurality of slots (4) than another second connector (10b, 10d, 10f), is arranged axially further to the inside than the other second connector (10b, 10d, 10f) .

12. Stator according to one of the preceding claims, wherein
q equal amounts (14a, 14b) of paths (7a-d) each have, in terms of the series connection, the same sequence of connectors (9a-e, 10a-f, 11a-h), each offset from one another by N-q slots (4).

13. Stator according to one of the preceding claims, wherein
the connectors (9a-d, 10a-f, 11a-h) arranged at one of the end faces (2a) of the stator core (3) are each formed in one piece with the shaped conductors (5) connected by them, and the connectors (9e) arranged at the other end face (2b) of the stator core (3) are formed by the, preferably substance-bonded, joining of free ends of connecting elements (17) which are formed in one piece with the shaped conductor (5) and adjoin the shaped conductor (5).

14. Stator according to one of the preceding claims, wherein
a respective shaped conductor (5) of a respective path (7a-d) that is on the outside in terms of the series connection has a free end projecting from one of the end faces (2a) of the stator core (3), and a connecting element (17) adjoins the shaped conductor (5) at the other end face (2b), the free end of which connecting element (17) is provided with the or a connecting element (17) which adjoins the second-outermost shaped conductor (5) of the path (7a-7d).

15. Electric machine (101), comprising a stator (1) according to one of the preceding claims and a rotor (102) arranged rotatably within the stator (1).

## Revendications

1. Stator (1) pour une machine électrique (101), dans lequel
- le stator (1) présente un nombre N de phases (U, V, W), un nombre P de paires de pôles et un nombre q d'encoche par pole et par phase, avec N ≥ 3 et P ≥ 2 et q ≥ 1,
- le stator (1) comprend un noyau de stator (3) avec au moins 2·N·P·q encoches (4) et un nombre 2·N·P·q·L de conducteurs façonnés (5) agencés en un nombre L de couches (6a-h) stratifiées radialement dans les encoches (4), L étant ≥ 4 et étant pair,
- les conducteurs façonnés (5) forment pour chaque phase 2·q chemins (7a-d) qui sont aptes à être connectés en série ou en parallèle les uns avec les autres et qui sont agencés dans 2P zones d'enroulement (8) qui s'étendent chacune radialement sur L couches (6a-h) et dans la direction circonférentielle sur au moins q encoches (4) immédiatement adjacentes,
- les conducteurs façonnés (5) de chaque chemin sont connectés en un circuit en série, qui est réalisé par des connecteurs (9a-e, 10a-f, 11a-g) agencés sur les deux faces frontales (2a, 2b) du noyau de stator,
- chaque chemin L/2 comprend des groupes (12a-d) de conducteurs façonnés (5) connectés successivement en série,
- chaque groupe (12a-d) est formé par au moins un ensemble (13a, 13b) d'au moins quatre conducteurs façonnés (5) qui sont agencés en alternance dans deux couches (6a-g) immédiatement adjacentes et qui sont connectés en série par des premiers connecteurs (9a-e) qui réalisent chacun une discontinuité de q·N encoches (4) dans la direction circonférentielle et une discontinuité d'une couche dans la direction radiale, **caractérisé en ce que**
- des paires de groupes (12a-d) adjacents par rapport au montage en série sont reliées chacune par un deuxième connecteur (10a-f) qui réalise un décalage de plusieurs encoches (4) dans la direction circonférentielle et une discontinuité de deux couches dans la direction radiale.

2. Stator selon la revendication 1, dans lequel
- q ≥ 2 et chaque zone d'enroulement (8) présente une première à q-ième zone d'enroulement partiel (8a, 8b),
- chaque zone d'enroulement partiel (8a, 8b) s'étend sur les L couches (6a-g),
- les zones d'enroulement partiel (8a, 8b) sont immédiatement adjacentes d'une zone d'enroulement (8) respective dans la direction circonférentielle.

3. Stator selon la revendication 2, dans lequel chaque zone d'enroulement partiel (8a, 8b) s'étend sur exactement une encoche (4).

4. Stator selon la revendication 3, dans lequel
les deuxièmes connecteurs (10a-f), qui relient des groupes (12a-d) d'un chemin respectif (7a-d), réalisent la même discontinuité autour de plusieurs encoches (4) et/ou
- des deuxièmes connecteurs (10a, 10c, 10e) d'au moins un des chemins (7a, 7c) réalisent un décalage autour de N·q-1 encoches (4) et/ou
- des deuxièmes connecteurs (10b, 10d, 10f) d'au moins un des chemins (7b, 7d) réalisent un décalage autour de N·q+1 encoches (4).

5. Stator selon la revendication 2, dans lequel
chaque zone d'enroulement partiel (8a, 8b) s'étend sur au moins deux encoches (4) immédiatement adjacentes et présente, dans la direction radiale, un nombre V de discontinuités autour d'une encoche (4) respective, avec V ≥ 1.

6. Stator selon la revendication 5, dans lequel
les discontinuités
- présentent la même orientation dans la direction circonférentielle et/ou
- sont présentes respectivement après L/[V+1] couches (6a-d) et/ou
des deuxièmes connecteurs (10a, 10b, 10e, 10f) d'au moins un des chemins (7a-d) réalisent un décalage autour de N·q-1 encoches (4) et/ou N·q-1 encoches (4) lorsqu'ils ne recouvrent pas une discontinuité dans la direction radiale.

7. Stator selon la revendication 5 ou la revendication 6, dans lequel
des deuxièmes connecteurs (10c, 10d) d'au moins l'un des chemins (7a-d) réalisent un décalage de
- N·q-2 encoches et/ou encoches (4) ou de
- N·q+2 encoches et/ou encoches (4) lorsqu'ils recouvrent une discontinuité dans la direction radiale.

8. Stator selon l'une des revendications 2 à 7, dans lequel
- chaque groupe (12a-d) comprend q agencements (13a, 13b) qui sont agencés chacun dans une zone différente des zones d'enroulement partiel (8a, 8b),
- par rapport au montage en série, des ensembles (13a, 13b) immédiatement adjacents d'un groupe (12a-d) respectif sont reliés par un troisième connecteur (11a-g) qui réalise un décalage d'un nombre de encoches (4) différent de N·q dans la direction circonférentielle et un décalage d'une couche (6a-g) dans la direction radiale.

9. Stator selon la revendication 8, dans lequel
les troisièmes connecteurs (11a-g) d'un chemin respectif (7a-d) réalisent le même décalage dans la direction circonférentielle et/ou
- des troisièmes connecteurs (11a, 11c, 11e, 11g) d'au moins un des chemins (7a, 7c) réalisent un décalage de N·q+1 encoches (4) et/ou
- des troisièmes connecteurs (11b, 11d, 11f, 11h) d'au moins un des chemins (7b, 7d) réalisent un décalage autour de N·q-1 encoches (4).

10. Stator selon la revendication 8 ou la revendication 9, dans lequel
des troisièmes connecteurs (11a-g) de chemins différents (7a-d), lesquels troisièmes connecteurs (11a-g) relient entre les mêmes zones d'enroulement (8) des conducteurs façonnés (5) dans les mêmes couches (6a-g), sont agencés de telle sorte qu'un troisième connecteur (11b, 11d, 11f, 11h), qui réalise un petit décalage autour de la pluralité de encoches (4) par rapport à un autre troisième connecteur (11a, 11c, 11e, 11g), est agencé axialement plus à l'intérieur que ledit autre troisième connecteur (11a, 11c, 11e, 11g).

11. Stator selon l'une des revendications précédentes, dans lequel
des deuxièmes connecteurs (10a-f) de chemins différents (7a-d), lesquels deuxièmes connecteurs (10a-f) relient entre les mêmes zones d'enroulement (8) des conducteurs façonnés (5) dans les mêmes couches (6a-g), sont agencés de telle sorte qu'un deuxième connecteur (10a, 10c, 10e), qui réalise un petit décalage autour de la pluralité de encoches (4) par rapport à un autre deuxième connecteur (10b, 10d, 10f), est agencé axialement plus à l'intérieur que ledit autre deuxième connecteur (10b, 10d, 10f).

12. Stator selon l'une des revendications précédentes, dans lequel
q quantités égales (14a, 14b) de chemins (7a-d) présentent chacune, en ce qui concerne le montage en série, la même succession de connecteurs (9a-e, 10a-f, 11a-h), qui sont décalés les uns par rapport aux autres de encoches (4).

13. Stator selon l'une des revendications précédentes, dans lequel
les connecteurs (9a-d, 10a-f, 11a-h) agencés sur l'une des faces frontales (2a) du noyau de stator (3) sont respectivement réalisés d'une seule pièce avec les conducteurs façonnés (5) qu'ils relient, et les connecteurs (9e) agencés sur l'autre face frontale (2b) du noyau de stator (3) sont reliés, de préférence par liaison de matière, par des extrémités libres d'éléments de liaison (17) qui sont formés d'une seule pièce avec le conducteur façonné (5) et qui se raccordent au conducteur façonné (5) .

14. Stator selon l'une des revendications précédentes, dans lequel
un conducteur façonné (5) respectif, extérieur par rapport au montage en série, d'un chemin (7a-d) respectif présente une extrémité libre en saillie sur l'une des faces frontales (2a) du noyau de stator (3), et un élément de liaison (17) se raccorde au conducteur façonné (5) sur l'autre face frontale (2b), dont l'extrémité libre est dotée de l'élément de liaison (17) ou d'un élément de liaison (17) qui se raccorde audit deuxième conducteur façonné (5), extérieur, du chemin (7a-7d).

15. Machine électrique (101) comprenant un stator (1) selon l'une des revendications précédentes et un rotor (102) monté rotatif à l'intérieur du stator (1).
